# EUROPEAN PATENT SPECIFICATION

(11) **EP 4 602 352 B1**
(45) Date of publication and mention of the grant of the patent: **02.12.2026**
(21) Application number: 23786497.0
(22) Date of filing: 28.09.2023
(51) Int. Cl.: G01N 23/04

(54) **RADIATION IMAGING SYSTEM FOR INSPECTION OF ITEMS AND METHOD THEREFOR**
STRAHLUNGSBILDGEBUNGSSYSTEM ZUR INSPEKTION VON GEGENSTÄNDEN UND VERFAHREN DAFÜR
SYSTÈME D'IMAGERIE PAR RAYONNEMENT POUR L'INSPECTION D'ARTICLES ET PROCÉDÉ ASSOCIÉ

(30) Priority: 28.09.2022 EP 22198504
(43) Date of publication of application: 20.08.2025
(73) Proprietor: Deltaray BV, 3530 Houthalen-Helchteren (BE)
(72) Inventor: HAMELINCK, Dirk, 2580 Beerzel-Putte (BE); LENAERTS, Bart, 3001 Heverlee (BE); AERTS, Steven, 3290 Schaffen (BE)
(74) Representative: Oryon NV
(86) International application number: PCT/EP2023/076834
(87) International publication number: WO 2024/068810

(56) References cited:
- DE-C- 741 334
- US-A- 5 740 221
- US-A1- 2009 257 552

## Description

### FIELD OF THE INVENTION

The present disclosure relates to the field of radiation imaging for testing and/or quality assurance of items in a variety of industrial applications. Specifically, the present disclosure describes a method and system that improve the speed, accuracy and efficiency of radiation imaging inspection through the use of item handling technology.

### BACKGROUND

In today's competitive environment, ensuring the quality of manufactured items provides a significant advantage. In many cases, safety-critical components with stringent quality requirements are involved, directly reducing potential risks. These components are often small in size, yet they play a vital role and place high demands on their production systems. Furthermore, smaller components are more challenging to manipulate and inspect for quality control.

In recent decades, X-ray technology has gained widespread use in environments where quality is paramount, such as the automotive industry. The primary reason for the popularity of X-ray imaging in item inspection is its ability to visualize, analyse, and inspect items in a non-destructive manner, making it ideally suited for inspecting items or their individual components.

Given that cycle time and volume requirements are critical factors in quality inspection, there is a high demand for fully automated inspection systems. Typically, automated systems consist of an inspection chamber, housing a radiation imaging device like an X-ray source, and mechanical handling equipment that transports items from one location to another. It is also common for the inspection chamber to be sealed to prevent radiation from escaping into the surroundings, often accomplished through an inlet, including for example a sliding or hinged door.

Automated handling of items within a sealed system is mechanically complex. On one hand, items need to be moved rapidly to achieve high throughput. On the other hand, their handling must be highly precise to meet industry standards for quality inspection. Specifically, the positioning and orientation of an item relative to the radiation imaging device significantly affect inspection accuracy, especially when examining a region of interest from a specific viewing angle. Additionally, loading and unloading items in and out of the inspection chamber through an inlet introduces significant delays in the inspection process.

For example, the use of a conveyor belt as handling equipment might be considered, continuously transporting items through the inspection chamber. However, due to the relative motion of the conveyor belt with respect to different components of the system, precise control of item positions and orientations becomes challenging. Moreover, achieving complete sealing of the radiation chamber with a continuous conveyor necessitates dividing the conveyor into sections that are sequentially opened and locked, such as the aforementioned sliding or hinged doors, thereby increasing the complexity of the design.

Alternative solutions, such as the use of advanced robotic arms, exist but are mechanically intricate and too costly to remain competitive. Accordingly, there is a need for a solution that addresses the limitations of current state-of-the-art radiation imaging systems, particularly concerning the (automated) handling of items within such inspection systems.

US 2009/257552 A1 discloses a computed tomography system for multi-target inspection comprising: a multi-target positioning unit having multiple target supports, each of the target supports being located along a corresponding line of sight of an X-ray source of the system, the target supports being operative to orient multiple targets simultaneously such that each of the multiple targets is positionable at multiple orientations.

### SUMMARY OF THE INVENTION

The present disclosure relates to the field of radiation imaging used for (automated)testing and quality assurance across a wide range of industrial applications. Specifically, this disclosure describes a method and system for inspecting items using radiation imaging technology to enhance quality control, such as defect detection or metrology.

It is an objective of the present disclosure to enhance the efficiency of item handling equipment within an (automated) radiation imaging system. This enhancement involves reducing the time and resources required for precisely positioning one or more items for inspection by a radiation imaging device. Furthermore, the automated item handling process aims to streamline the loading and unloading cycle for these items into and out of the radiation imaging system. This is achieved, in part, through one or more access ports that provide access to the radiation imaging system.

It is another objective to simplify the design of the item handling equipment. This simplification entails minimizing the number of components necessary to achieve rapid and dependable item handling. By doing so, the cost of the item handling equipment can be reduced, ensuring competitiveness in the market. Additionally, a streamlined design with fewer components results in a lighter and more compact system, reducing the resources required to maintain its functionality. This is achieved, in part, through one or more access ports that provide access to the radiation imaging system.

A first overview of various aspects of the technology according to the present disclosure is given hereinbelow, after which specific embodiments will be described in more detail. This first overview is meant to aid the reader in understanding the technological concepts more quickly, but it is not meant to identify the most important or essential features thereof, nor is it meant to limit the scope of the present disclosure.

An aspect of the present disclosure describes a radiation imaging system for inspecting a plurality of items, comprising: a radiation imaging device comprising at least one source and at least one detector that define a projection space between them; a shielded enclosure, delimited by enclosure walls that define an interior arranged for housing the radiation imaging device, wherein the enclosure walls are configured to block radiation transmission; at least one access port, arranged within one of the enclosure walls, comprising a housing with at least two openings forming a passage therethrough, at least one internally revolving door rotatably arranged within the housing, and an actuator for rotating the revolving door; at least one item handling apparatus comprising a plurality of mounts and a manipulator having a plurality of mounting slots adapted for receiving the plurality of mounts; wherein the manipulator is moveably arranged within the radiation imaging system; wherein each of the mounts comprises a mounting part adapted for mounting of at least one item thereon, and a coupling part adapted for releasably coupling to the manipulator at one of the mounting slots; wherein the access port further comprises a plurality of retaining elements, arranged on at least one side of the revolving door; wherein each mount further comprises a retaining part, arranged between the mounting part and the coupling part, capable of engaging with one of the retaining elements to suspend the mount while leaving the coupling part accessible to the item handling apparatus; wherein the item handling apparatus is configured for releasably coupling with the plurality of mounts suspended on the retaining element by engaging with the coupling part; releasing the plurality of mounts when placed onto the retaining element by disengaging from the coupling part; and, positioning at least one of the plurality of items mounted on the mounts within the projection space for acquiring one or more projection images thereof.

In some embodiments the item handling apparatus is configured for releasably coupling with the plurality of mounts by engaging the retaining element, preferably in a direction that is substantially orthogonal to the retaining element and/or in a substantially vertical direction, thereby fitting the coupling part of the mounts into the mounting slots, and disengaging from the retaining element, preferably in a direction that is substantially parallel with the retaining element and/or in a substantially horizontal direction, thereby removing the mounts from the retaining elements.

In some embodiments the item handling apparatus is configured for releasing the plurality of mounts by engaging the retaining elements, preferably in a direction that is substantially parallel to the retaining element and/or in a substantially horizontal direction, thereby positioning the retaining part of the mounts on the retaining element, and disengaging from the retaining element, preferably in a direction that is substantially orthogonal to the retaining element and/or in a substantially vertical direction, thereby suspending the mounts on the retaining elements.

In some embodiments the plurality of retaining parts are arranged along a plurality of rows stacked above each other on at least one sidewall of the revolving door; wherein the rows are aligned at a sloped angle, and the manipulator is configured to engage with the retaining parts by engaging at the corresponding sloped angle; preferably wherein the rows are arranged at a slope of at least 30 to at most 60 degrees, more preferably 40 to 50 degrees, and most preferably about 45 degrees.

In some embodiments the access port further comprises a loading module comprising the plurality of retaining element, preferably fixedly arranged on the load module; wherein the loading module is configured to detachably couple to at least one side of the revolving door, thereby allowing for the detachment of the loading module, along with any mounts suspended on the retaining element, from the revolving door, and optional attachment of another loading module.

In some embodiments the access port comprises a plurality of retaining elements stacked substantially above each other on at least one side of the revolving door; wherein the mounts suspended on each one of the plurality of retaining elements can be independently engaged by the item handling apparatus.

In some embodiments the retaining element is oriented at a sloped angle and the item handling apparatus is configured to engage with the retaining part of the mount suspended on the retaining element by engaging at the corresponding sloped angle; preferably wherein the retaining element is oriented at a slope of at least 30 degrees to at most 60 degrees, more preferably 40 degrees to 50 degrees, and most preferably about 45 degrees.

In some embodiments the access port further comprises a loading module comprising the at least one retaining element, preferably the plurality of retaining elements, fixedly arranged on the load module; wherein the loading module is configured to detachably couple to at least one side of the revolving door, thereby allowing for the detachment of the loading module, along with any mount, suspended on the retaining element, from the revolving door, and optional attachment of another loading module.

In some embodiments the retaining element comprises a retaining slot; and wherein the retaining part of the mount is designed with a fitting matching the shape of the retaining slot.

In some embodiments the revolving door comprises at least one central part and at least two, preferably angled, oppositely arranged side parts, designed to match the size of the openings to block radiation during rotation of the revolving door.

In some embodiments the housing of the access port is cylindrical in shape, and the revolving door is designed to match the shape of the housing with the side parts being co-cylindrical in shape to minimize the spacing between the housing of the access port and the revolving door.

In some embodiments the housing of the access port comprises opposing upper and lower surfaces, arranged adjacent to the revolving door; wherein the upper and lower surfaces comprise at least one, preferably angled, radiation-blocking element, extending orthogonally therefrom, and wherein the revolving door comprises at least one, preferably angled, complementary radiation-blocking element designed to interleave with the radiation-blocking element in a manner that blocks radiation during rotation of the revolving door regardless of its rotational position.

In some embodiments the housing comprises a plurality of radiation-blocking elements and complementary radiation-blocking elements arranged in an alternating manner with openings between them, wherein the radiation-blocking elements and complementary radiation-blocking elements are designed so that a plurality of concentric circles are formed during rotation of the revolving door; preferably forming a radiation-blocking labyrinth or chicane.

In some embodiments the radiation imaging system comprises at least a second access port arranged within a separate enclosure from the first access port, preferably on an opposite side of the shielded enclosure; wherein the manipulator is configured for releasable coupling with the plurality of mounts suspended on the retaining elements of the first access port, and releasing the plurality of mounts onto the retaining elements of the second access port.

In some embodiments the radiation imaging system comprises one or more tracks connecting the access port to the projection space, and the manipulator is arranged on the tracks, allowing it to move along them.

In some embodiments the radiation imaging system comprises at least two tracks, preferably arranged parallel and/or alongside each other, and at least two manipulators, arranged on the different tracks, enabling the manipulators to alternate between the access port and the projection space.

Another aspect of the present disclosure relates to an apparatus for the automated handling of a plurality of items for inspection in a radiation imaging system, the apparatus comprising: a manipulator, moveably arranged in the radiation imaging system, comprising a plurality of mounting slots; a plurality of mounts that have a mounting part, adapted for mounting of at least one item thereon, and a coupling part, adapted for releasably coupling to the manipulator at one of the mounting slots; wherein the manipulator comprises a plurality of rotatable members that have a driving part, configured to drive the coupling part of at least one of the mounts, and a driven part, that can be driven so as to rotate said mount about an axis extending transversely from the mounting slot, wherein the rotatable members are rotatably coupled at their driven parts so that a rotation of at least one of the rotatable members simultaneously rotates at least another one of the rotatable members, and, wherein the apparatus comprises an actuator configured to drive a rotation of at least one of the rotatable members.

In some embodiments the apparatus for the automated handling of a plurality of items for inspection is part of the radiation imaging system for inspecting a plurality of items in accordance with any embodiments thereof.

In some embodiments the mounting slots are arranged in a contiguous manner so that the distance between the plurality of mounts is minimized.

In some embodiments the mounting slots are arranged in a linear manner, preferably along a longitudinal axis of the manipulator, so that the plurality of mounts are rotated within the same plane, transverse to said longitudinal axis.

In some embodiments the manipulator comprises a rotatable coupling means, configured to rotatably couple the rotatable members in such a way that the rotatable members are rotated equally.

In some embodiments the rotatable coupling means is configured to rotatably couple the rotatable members in such a way that the rotatable members are rotated equivalently, based on a viewing angle of the radiation imaging system.

In some embodiments the coupling parts of the mounts have a, preferably tapered, fitting that matches the internal shape of the mounting slots.

In some embodiments the manipulator comprises a clamping member, that is arranged in one of the mounting slots and is configured to releasably clamp the coupling part of one of the mounts when it is inserted into said slot.

In some embodiments the manipulator comprises a casing that has a plurality of apertures, that are arranged so to provide access to the plurality of mounting slots.

In some embodiments the rotatable members have an elongated body, and the manipulator comprises a stabilizing element, that is arranged around a portion of said elongated body and is configured to stabilize the rotatable member during rotation.

Another aspect of the present disclosure relates to a radiation imaging system for the inspecting of a plurality of items, comprising a radiation imaging device with a source and a detector, that define a projection space between them for acquiring a projection image of at least one of the items; and the apparatus for handling the positions of the plurality of items in the projection space.

In some embodiments the system comprises a housing and an access port that provides access to the radiation imaging system.

In some embodiments the access port comprises a retaining element, that is fixedly arranged in said access port; and wherein the plurality of mounts have a retaining part, arranged between the mounting part and the coupling part, that can engage with the retaining element in a way that the mount can be retained in a suspended manner with the coupling part being freely accessible.

In some embodiments the retaining element comprises a plurality of retaining slots; and wherein the retaining parts of the mounts have a fitting that matches the internal shape of the retaining slots.

In some embodiments the manipulator is configured to releasably couple with the plurality of mounts, when retained on the retaining part, by engaging towards the suspended coupling part, preferably in an upward manner; and/or, release the plurality of mounts, when positioned onto the retaining element, by disengaging from the coupling part, preferably in a downward manner.

In some embodiments the access port comprises a housing having at least two oppositely arranged openings, at least one revolving door, rotatably arranged in said housing, and an actuator, configured to actuate a rotation of said revolving door.

In some embodiments the revolving door comprises a central part and at least two, oppositely arranged, side parts, that have a shape corresponding to the size of the openings such that they prevent radiation from escaping when the revolving door is rotated.

In some embodiments the housing of the access port comprises a plurality of radiation blocking elements, extending orthogonally from two opposite surfaces of said housing, preferably arranged in a way that forms a plurality of concentric circles; wherein the revolving door comprises a plurality of radiation blocking elements, complementary to the radiation blocking elements of the housing, that are matched in a way that a radiation blocking labyrinth is formed when the revolving door is rotated.

Another aspect of the present disclosure relates to a method of inspecting a plurality of items, comprising the steps of:
- providing a system as described in any aspect thereof;
- mounting a plurality of items on mounts;
- suspending the mounts from retaining elements arranged on an access port;
- rotating a revolving door of the access port until the mounts are positioned within the system;
- releasably coupling the mounts to an item handling apparatus;
- positioning at least one item within a projection space to acquire one or more projection images thereof;
- positioning the mounts back onto the retaining elements of the access port;
- releasing the mounts from the item handling apparatus, thereby suspending the mounts from the retaining elements;
- rotating the revolving door of the access port until the mounts are positioned outside of the system;
- optionally, removing the mounts and items from the retaining elements; and,
- optionally, repeating the preceding steps for one or more further plurality of items.

In some embodiments the handling apparatus releasably couples the mounts by engaging the retaining elements, preferably in a direction that is substantially orthogonal to the retaining element and/or a vertical direction, thereby fitting the coupling part of the mounts into the mounting slots, and disengaging from the retaining element, preferably in a direction that is substantially parallel to the retaining element and/or a horizontal direction, thereby removing the mounts from the retaining elements.

In some embodiments the item handling apparatus releases the mounts by engaging the retaining elements, preferably in a direction that is substantially parallel to the retaining element and/or a horizontal direction, thereby positioning the retaining part of the mounts on the retaining element, and disengaging from the retaining element, preferably in a direction that is substantially orthogonal to the retaining element and/or a vertical direction, thereby suspending the mounts on the retaining elements. In some embodiments the method is performed for a plurality of items mounted on a plurality of mounts, wherein the plurality of mounts holding the plurality of items is simultaneously suspended on a plurality of retaining elements, simultaneously detachably coupled with the item handling apparatus, and/or simultaneously released from the item handling apparatus.

### DESCRIPTION OF THE FIGURES

The following description of the figures relate to specific embodiments of the disclosure which are merely exemplary in nature and not intended to limit the present teachings, their application or uses.

Throughout the drawings, the corresponding reference numerals indicate the following parts and features: radiation imaging system (1); item handling apparatus (10); central axis (11); longitudinal axis (12); transverse axis (13); source (21); detector (22); projection space (23); projection central axis (24); focal spot (25); housing (31); inspection chamber (32); access port (33); revolving door central part (34); revolving door side part (35); retaining element (36); actuator (37); radiation blocking element on the revolving door (38); radiation blocking element on the housing (39); manipulator (4); casing (41); mounting slot (42); axis of rotation (43); coupling element (44); rotatable member (45); rotatably coupling means (46); intermeshing gears (461); toothed belt (462); stabilising means (47); mount (5); mounting part (51); coupling part (52); retaining part (53); item (6); actuator (71); encoder (72); tilting actuator (73); control unit (75); loading apparatus (91); drum (92); holder for loading items (93); holder for unloading items (94).
**FIG. 1** shows a top view of an embodiment of a radiation imaging system 1.
**FIG.2** shows a side view of an embodiment of an item handling apparatus 10.
**FIG.3** shows a side view of another embodiment of an item handling apparatus 10.
**FIG.4** shows a side view of yet another embodiment of an item handling apparatus 10.
**FIG.5** shows a perspective front view of an embodiment of an item handling apparatus 10 with a front cover.
**FIG.6** shows the item handling apparatus 10 of **FIG.5** with the front cover removed.
**FIG.7** shows a cross-sectional view of the item handling apparatus 10 of **FIG.5****.**
**FIG.8** shows a cross-sectional view of an embodiment of a releasable coupling means of an item handling apparatus 10 wherein a mount 5 is releasably coupled.
**FIG.9** shows the releasable coupling means of **FIG.8** wherein a mount 5 is released.
**FIG.10** shows a randomised arrangement of a plurality of mounts 5 on an embodiment of an item handling apparatus 10.
**FIG.11** shows an aligned arrangement of a plurality of mounts 5 on the apparatus of **FIG.10****.**
**FIG.12** shows perspective side view of an embodiment of a mount 5.
**FIG.13** shows an embodiment of the mount 5 of **FIG.12** comprising a detachable mounting part 51.
**FIG.14** shows an arrangement of a plurality of mounts 5 with a large shape or geometry on an item handling apparatus 10.
**FIG.15** shows a perspective view of an embodiment of a radiation imaging system 1 comprising an access port 33.
**FIG.16** shows an exploded view of an embodiment of a revolving door of the access port 33 of **FIG.15****.**
**FIG.17** shows an exploded view of an embodiment of a housing of the access port 33 of **FIG.15****.**
**FIG.18** shows a front view of an embodiment of an access port 33.
**FIG.19A** shows the access port 33 of **FIG.18** viewed along cross-section [A-A].
**FIG.19B** shows the access port 33 of **FIG.18** viewed along cross-section [B-B].
**FIG.19C** shows the access port 33 of **FIG.18** viewed along cross-section [C-C].
**FIG.20** shows an embodiment of an access port 33 comprising a retaining element 36 from a perspective view, that holds a plurality of mounts 5 in a suspended manner.
**FIG.21** shows a close-up view of the access port 33 of **FIG.20****.**
**FIG.22** shows a front view up of the access port 33 of **FIG.20****.**
**FIG.23** shows the initial step of an embodiment of a method for loading an item 6 from the access port 33 of **FIG.20** onto a manipulator 4.
**FIG.24** shows the subsequent step of the method following the step of **FIG.23**
**FIG.25** shows the subsequent step of the method following the step **ofFIG.24.**
**FIG.26** shows another embodiment an access port 33 comprising a plurality of retaining elements 36 stacked above each other from a perspective view.
**FIG.27** shows a side view of the access port 33 of **FIG.26****.**
**FIG.28** shows the initial step of an embodiment of a method for loading an item 6 from the access port 33 of **FIG.26** onto the manipulator 4.
**FIG.29** shows the subsequent step of the method following the step of **FIG.28**
**FIG.30** shows the subsequent step of the method following the step of **FIG.29****.**
**FIG.31** shows a perspective view of an embodiment of a radiation imaging system 1 comprising an (external) loading apparatus 91 configured for the loading of items into the access port 33.

### DETAILED DESCRIPTION

In the following detailed description, the technology underlying the present disclosure will be described by means of different aspects thereof. It will be readily understood that the aspects of the present disclosure, as generally described herein, and illustrated in the figures, can be arranged, substituted, combined, and designed in a wide variety of different configurations, all of which are explicitly contemplated and make part of this disclosure. This description is meant to aid the reader in understanding the technological concepts more easily, but it is not meant to limit the scope of the present disclosure, which is limited only by the claims.

The present disclosure relates to the field of radiation imaging for testing and/or quality assurance of items in a variety of industrial applications. Specifically, the present disclosure describes a method and system that improve the speed, accuracy and efficiency of radiation imaging inspection through the use of item handling technology. The present technology can be applied in the field of radiation imaging for (automated) testing and/or quality assurance of items in a wide range of industrial applications, for example, for defect detection or metrology.

The technology described in the present disclosure can be considered as a versatile "general purpose" item inspection technology that can be easily adapted for quality inspection of various items. These items may include different mechanical components used in various industries such as automotive, aviation, and mechanical engineering. It's important to note that this technology is not limited to specific item shapes or materials. Instead, it is applicable to any item that can be inspected using radiation imaging technology.

In this context, "radiation imaging technology" refers to imaging techniques that use ionizing radiation to visualize the internal structure and features of an item, such as a product or object. While this technology can most readily utilize X-rays, some parts of this description may reference techniques commonly associated with X-ray technology for brevity. Nevertheless, it's crucial to understand that this technology can be implemented using other forms of ionizing radiation or even non-ionizing radiation.

To create an image using radiation imaging technology, a radiation source generates a beam of radiation that is directed towards an item or object. The amount of radiation absorbed by the object depends on its density and structural composition. A detector positioned behind the item captures the radiation that passes through it. Consequently, a "radiation imaging device," as referred to here, combines a radiation source and a detector, and the space between them, where an object can be placed to capture an image, is known as the "projection space." Various parameters of the radiation imaging device can be adjusted to modify the dimensions of this projection space.

Information regarding the interaction between the item and the radiation beam is collected and processed to produce a two-dimensional (2D) "projection image." The item can influence the radiation beam in several ways, such as attenuating its intensity (e.g., in standard X-ray imaging), diffracting it into specific directions (e.g., in X-ray crystallography), or altering its phase (e.g., in phase-contrast X-ray imaging). Combining data from multiple projection images allows for the creation of a "reconstruction image" using known image reconstruction techniques. Additionally, by combining data from multiple viewing angles, a partial (2.5D) or complete three-dimensional (3D) "volumetric reconstruction image" can be generated. These projection and reconstruction images can undergo analysis using image processing techniques known in the art to extract information about the object, including classification and identification.

The pose of an item relative to the radiation imaging device can affect inspection accuracy, especially when examining a specific region of interest from a particular viewing angle. In this context, "pose" refers to the position and orientation of the inspected item relative to a specific reference, such as the radiation imaging device. The pose can be defined by one or more spatial parameters that describe the position and/or orientation of the item concerning the reference. Information about the item's pose can be obtained from the item's handling or inspection, often based on identifiable landmarks. Therefore, "positioning" an item, as used here, refers to performing one or more handling actions that adjust the item's pose relative to the reference. This may involve rotating the item to a different orientation or viewing angle (e.g., rotational angle α), changing its position (e.g., x, y, z-coordinates), zoom level, or tilting (e.g., tilt angle θ).

An overview of various aspects of the technology of the present disclosure is given hereinbelow, after which specific embodiments will be described in more detail. This overview is meant to aid the reader in understanding the technological concepts more quickly, but it is not meant to identify the most important or essential features thereof, nor is it meant to limit the scope of the present disclosure, which is limited only by the claims. When describing specific embodiments, reference is made to the accompanying drawings, which are provided solely to aid in the understanding of the described embodiment.

An aspect of the present disclosure describes a radiation imaging system for inspecting a plurality of items, comprising: a radiation imaging device comprising at least one source and at least one detector that define a projection space between them; a shielded enclosure, delimited by enclosure walls that define an interior arranged for housing the radiation imaging device, wherein the enclosure walls are configured to block radiation transmission; at least one access port, arranged within one of the enclosure walls, comprising a housing with at least two openings forming a passage therethrough, at least one internally revolving door rotatably arranged within the housing, and an actuator for rotating the revolving door; at least one item handling apparatus comprising a plurality of mounts and a manipulator having a plurality of mounting slots adapted for receiving the plurality of mounts; wherein the manipulator is moveably arranged within the radiation imaging system; wherein each of the mounts comprises a mounting part adapted for mounting of at least one item thereon, and a coupling part adapted for releasably coupling to the manipulator at one of the mounting slots; wherein the access port further comprises a plurality of retaining elements, arranged on at least one side of the revolving door; wherein each mount further comprises a retaining part, arranged between the mounting part and the coupling part, capable of engaging with one of the retaining elements to suspend the mount while leaving the coupling part accessible to the item handling apparatus; wherein the item handling apparatus is configured for releasably coupling with the plurality of mounts suspended on the retaining element by engaging with the coupling part; releasing the plurality of mounts when placed onto the retaining element by disengaging from the coupling part; and, positioning at least one of the plurality of items mounted on the mounts within the projection space for acquiring one or more projection images thereof.

Another aspect of the present disclosure relates to apparatus for the (automated) handling of a plurality of items for inspection in a radiation imaging system, the apparatus comprising: a manipulator, moveably arranged in said radiation imaging system, comprising a plurality of mounting slots; a plurality of mounts, comprising a mounting part adapted for mounting of at least one item thereon, and a coupling part configured for releasably coupling to the manipulator at one of the mounting slots; wherein the manipulator comprises a plurality of rotatable members configured to rotate the plurality of mounts about an axis extending transversely from the mounting slot, that are rotatably coupled such that a rotation of at least one of said rotatable members simultaneously rotates at least another one of the plurality of rotatable members, preferably simultaneously rotates all of the plurality of rotatable members, and at least one actuator configured to actuate a rotation of at least one of said rotatable members. In some embodiments the apparatus for the automated handling of a plurality of items for inspection is part of the radiation imaging system for inspecting a plurality of items in accordance with any embodiments thereof.

Another aspect of the present disclosure relates to a radiation imaging system for inspecting of a plurality of items comprising a radiation imaging device with a source and a detector defining a projection space between them for acquiring a projection image; and the apparatus according to an embodiment as described herein for positioning said plurality of items in the projection space.

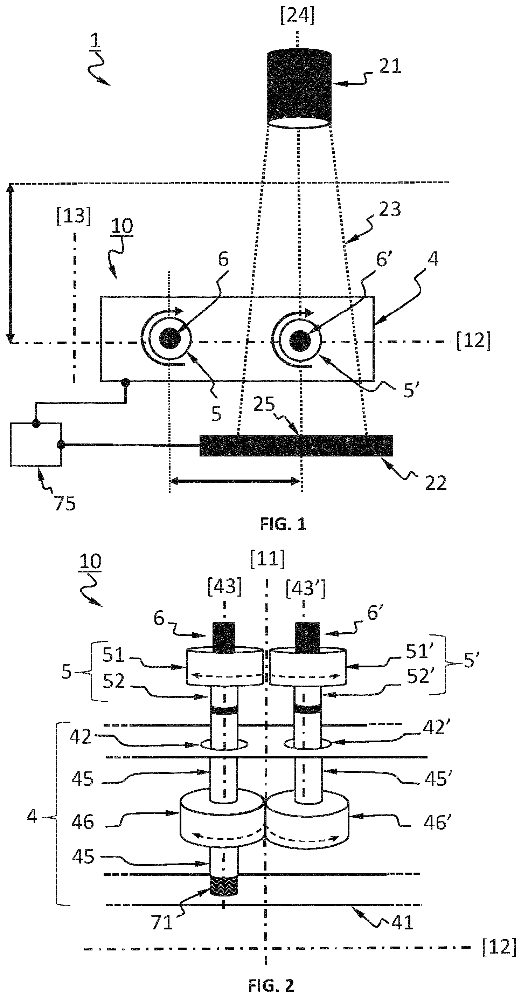

The present technology will be discussed with reference to **Figure 1****,** which schematically shows an embodiment of a radiation imaging system 1 from a top view. The system 1 comprises a radiation imaging device consisting of a radiation source 21 and detector 22. As explained earlier, when an item 6 is positioned within the projection space 23 formed between the source 21 and detector 22, as illustrated, a projection image can be acquired for inspection of this item 6. It is understood that a plurality of radiation sources and/or detectors can be provided to create one or more projection spaces for the inspection of the items, sequentially or simultaneously.

Advantageously, the inspected item 6 is placed along axis 24, defined centrally through the source 21 and perpendicular to the detector 22, referred to hereinbelow as the "projection axis" 24. The position at which the projection axis 24 hits the detector forms a focal spot 25. The focal spot size has a direct correlation to image resolution, which is important for detection of (small) defects. Positioning of the item 6 along the projection central axis 24 typically results in the sharpest (least blurred) image. In this way, the value of a mechanical means for positioning the item at the "optimal" imaging position may be appreciated, as will be discussed next.

**Figure 1** shows an embodiment of an apparatus 10 for the handling of items 6 mounted thereon. As explained above, the item handling apparatus 10 may be configured for repositioning the plurality of mounted items 6 by moving their positions, for example, along the longitudinal axis 12 to position one or more items along the projection central axis 24, or in another example, along the transverse axis 13 to adjust the zoom level by changing the distance of one or more items relative to the previously discussed components of the radiation imaging device.

The shown apparatus 10 comprises a manipulator 4 having a plurality of items 6 mounted thereon. The manipulator 4 is moveably arranged in said radiation imaging system 1 so that it can reposition the mounted items 6 as previously mentioned. However, as will be explained later, every item 6 is mounted on a plurality of (different) item mounts 5, that are arranged at predefined positions along the manipulator 4, more specifically corresponding with the positions of a plurality of mounting slot 42. The mounts 5 are releasably coupled to the mounting slot 42 so that they can freely switch between a coupled state and a released state, as will be explained later.

The item mounts are advantageously adapted to provide for a reliable mounting of the mounted items so that they do not (easily) fall off or even prevent any movement thereof, for instance, when they are moved by the manipulator. The mount may, for example, be a puck or a clamp that has a particular shape adapted to the geometry and shape of the mounted item 6 in order to realise a secure mounting Advantageously the mount has a shape that mechanically fixes the pose of the mounted item in a specific range of possible poses such that the item's pose is known (at least to an extent).

The item mounts can be rotatably coupled to the manipulator or a part thereof so that a rotation of the mounted item along its central axis can be actuated by the manipulator. Rotation of the mounted item can change the item's orientation relative to its mounted pose, i.e., the pose as initially mounted, such that an image at the "optimal" viewing angle can be acquired, relative to the radiation imaging device.

An embodiment of the mount's rotational mechanics is discussed with reference to **Figure 2****,** which shows the apparatus of **Figure 1** from a side view. Specifically, the apparatus 10 is shown to comprise an actuator 71 configured to actuate a rotation of a rotatable member 45 that is rotatably arranged in the manipulator and that is rotatably coupled to a mount 5 such that a rotation of the rotatable member 45 also rotates the coupled mount 5, and hence any item mounted thereon 6, directly or indirectly.

The actuator can be configured to rotate a rotatable member in at least one direction, clockwise or counterclockwise. Advantageously, the actuator is configured to freely rotate the item in any specific direction, i.e., clockwise and counterclockwise. The actuator can comprise any type of actuator, for example a rotary actuator, although, preferably an electric actuator is considered because it allows for higher accuracy and tracking of the rotation.

Referring back to **Figure 1****,** it is shown that the manipulator 4 can be moved in a first direction, specifically along the manipulator's longitudinal axis 12, continuously or in steps. By moving the manipulator 4 along its longitudinal axis 12 -indicated with the horizontal double-sided arrow- another item 6 can, for instance, be placed along the projection central axis 24. Alternatively or in combination, the imaging system 1 may be configured to move the source 21 and/or the detector 22 (at least to an extent) with respect to the item 6 in order to change the position of the projection central axis 24. However, the implementation of a moveably arranged manipulator 4 is mechanically less complex and therefore generally more reliable for item inspection. The same embodiment can be extended to greater number of items arranged in a sequence along the same longitudinal axis 11. Specifically, by moving the manipulator 4 along this longitudinal axis 12, each item 6 can be sequentially placed in the focal spot 25 in order to acquire a sequence of projection images, such that each image contains at least one item 6.

In some embodiments the radiation source may be configured to acquire at least one image containing a plurality of items. The acquired image can be split into plurality of smaller projection images for the plurality of items, each split projection image advantageously corresponding with a different portion of the projection space. For example, a total of five portions of the projection space can be defined that overlap with five adjacently mounted items. This way the time for acquiring a projection image can be reduced by a factor of 5 compared to an embodiment in which each item needs to be moved, for example, one by one. The skilled person understand that the expected time reduction is based on the number of items contained in the image, for example a factor of 2 for 2 items, 3 for 3 items, 4 for 4 items, and so on. Alternatively, at least one image containing at least a portion, e.g. two or more, of the plurality of items may be acquired, for instance if there are too many mounted items to capture in a single image. The partial image may then similarly be split up into a plurality of smaller projection image, depending on the number of items.

As further shown in **Figure 1****,** the manipulator 4 can be moved in a second direction, specifically along the manipulator's transverse axis 13, continuously or in steps. By moving the manipulator 4 along its transverse axis 13 -indicated with a vertical double-sided arrow- the zoom level for the projection image can be adjusted. Specifically, in the lowest zoom level the distance between the source 21 and item 6 is highest. Accordingly, by moving the manipulator 4 towards the source 21, the distance between the source 21 and item 6 can be decreased, thereby increasing the zoom level. Alternatively or in combination, the system 1 may be configured to move the source 21 and detector 22 with respect to the manipulator 4. However, the provision of a moveable manipulator 4 is mechanically less complex.

Although not shown in **Figure 1****,** the manipulator 4 can be moved in a third direction, along the manipulator's central axis 11, continuously or in steps. This way, the height of the item can be adjusted, which is advantageous because the dimensions of the mounted items might vary and advantageously each item's centre is aligned with the imaging device's height (not shown). Additionally, inspection of a specific region of interest in high zoom levels may require adjusting the item's height such that said region is aligned with the imaging device's central axis.

In any of the above embodiment, the apparatus may comprise or be connectable to an actuator, that is configured for moving the position of the manipulator along at least one axis of movement in accordance with any of the above embodiments; although, the actuator is preferably configured for moving the position of the manipulator along two or three axes of movement. Alternatively or in combination, the actuator may be configured for tilting the manipulator, as will be discussed later.

Although the embodiment is described by way of one actuator, the combination of multiple, advantageously complementary, actuators is equally suitable. An embodiment of a suitable actuator may include, for example, a robotic arm, that can connect to the manipulator,

Returning back to **Figure 2****,** it is further shown that the manipulator 4 comprises a plurality of rotatable members 45, for example, two rotatable members, that are rotatably coupled such that they simultaneously rotate when at least one rotatable member 45 is rotated, for instance, when driven by the actuator 71. The "simultaneous" rotation as referred to herein corresponds to a rotation that happens at the same time, such that a reliable and fast rotation of at least a part of the plurality of items can be realised at a reduced complexity of the apparatus. In this way, the number of actuators can be reduced, allowing a lighter and more compact design of the manipulator 4. Therefore, the rotatably coupled rotatable members 45 are advantageously actuated by a functionally shared actuator.

In some embodiments the rotatable members may comprise a driving part configured to connect to at least one of the mounts , and a driven part configured to be driven, for instance, by the actuator. For example, in **Figure 2** it is shown that a rotatable member 45 may comprise an elongated body, such as shaft, that has two ending, wherein one ending connects to the coupling part 51 of the mounted item and another ending connects to the actuator 71.

In some embodiments all of the plurality of rotatable members are rotatably coupled such that all of the mounted items can be rotated simultaneously. As previously explained, this allows for reducing the mechanical complexity of the holder further still, for instance, by omitting even more (additional) actuators from the manipulator. Additionally, this can also reduce the operational complexity of the manipulator, because the synchronisation and calibration of a large number of actuators can be complex. This is particularly relevant for defect inspection because the item rotation needs be very accurate, e.g. as low as 0.01°. Hence, by rotatably coupling the rotatable members at a mechanical level, the apparatus can achieve the same level of accuracy for every mounted item.

There are different manners in which a rotatable coupling of the rotatable members can be realised. For example, in **Figure 2** a rotatable coupling means 46 may be arranged between the rotatable members 45 that mechanically couples the members 45 to each other. The coupling means are arranged between the actuator 71 and the mounts 5, such that for a first rotatable member 45, that is driven by the actuator 71, the corresponding coupling means 46 is rotated along with the rotatable member 45, which then transfers the rotational movement to a coupling means 46' of a second rotatable member, such that it will simultaneously rotate.

Some examples of suitable embodiments of the rotatable coupling means are discussed below, although it will be understood that other types of mechanical couplings may be considered also. For instance, the rotatable coupling may be a direct mechanical coupling or an indirect coupling through one or more intermediary components. However, it should be appreciated that the rotatable coupling means is described as a separate component for ease of explanation, however, for specific embodiments the rotatable coupling means may be (partially) integrated into one or more rotatable members such that it forms a part thereof for a compacter design.

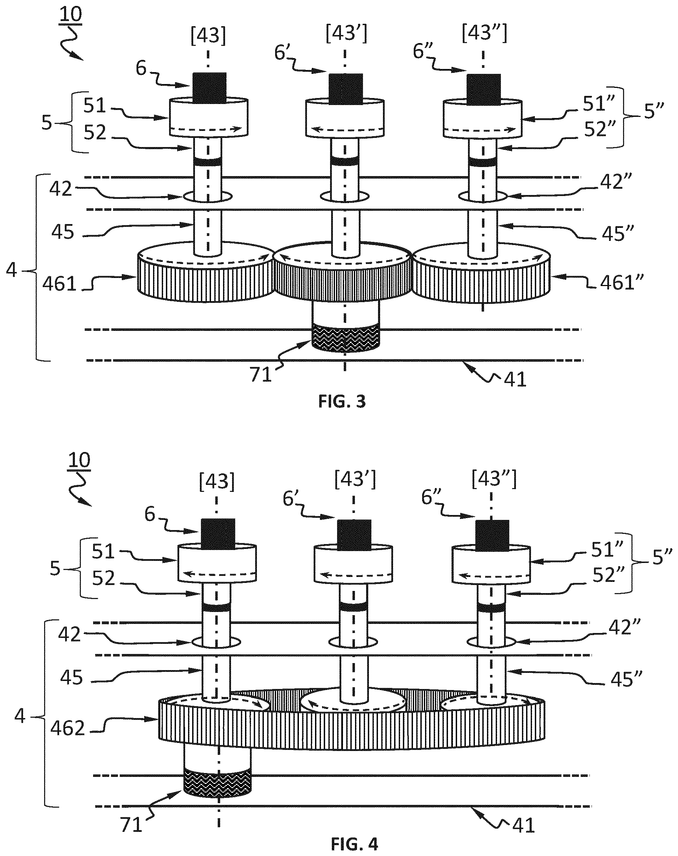

As shown in **Figure 3****,** the rotatable coupling means 46 may comprise a plurality of intermeshing elements 461, such as that, for example, have a matching surface that mash up together to transfer rotational movement or speed. Accordingly, the teeth of the two coupled gears can interlock with each other so when one gear moves, it rotates the other in the opposite direction, for example clockwise and counterclockwise. For example, in **Figure 3** three gears 461-461" are directly connected, this way every neighbouring gear rotates the three corresponding rotatable members 45-45" in an opposite direction - the rotational directions are indicated with dashed arrows. Nonetheless, the particular rotational direction can be manipulated through the use of intermediate elements, for example, secondary gears, that make the primary gears rotate in the same direction, for example, clockwise or counterclockwise. Moreover, it should be appreciated that, although the figure shows only three connected members, there is no limitation on the number of members that can be connected, for example, four, five or more, as will be illustrated in later embodiments, provided that the actuator can deliver generate sufficient power.

As shown in **Figure 4****,** the rotatable coupling means may comprise a drive belt 462, such as a chain or belt, that, for example, has teeth or rims moulded onto its inner surface, that is designed to run over matching elements, such as teethed pulleys or sprockets, that, for example, have a matching surface designed to fit into the slots of the drive belt, that transfers the rotational movement or speed from one place to another. Accordingly, the teeth of the two coupled sprockets can be connected together with the belt so that when one sprocket moves, it rotates the other in the same direction, for example clockwise or counterclockwise. For example, in **Figure 4** the belt 462 directly connects to three sprockets, this way every connected sprocket rotates the corresponding three rotatable members 45-45" in a same direction - the rotational directions are indicated with dashed arrows.

In some embodiments, at least two rotatable members can be equally coupled such that the thereon mounted items can be rotated equally, *i.e*., in the same manner or to the same extent. For example, rotation of one item by 1.0° can equally rotate another item by 1.0°, in the same or opposite direction. In this way, the mounted items' poses become coupled, for instance, between different projection images, which may improve the inspection efficiency, for instance, when a sequence of projection images is acquired.

In some embodiments, at least two rotatable members can be equivalently coupled such that the thereon mounted items can be rotated equivalently, *i.e*., in a similar manner or to a similar extent relative to a reference, for example, the imaging device, in the same or opposite direction. Preferably the items are rotated based on (equivalent) deviations in the imaging device's viewing angles. For example, rotation of a central item by 5° can equivalently rotates a neighbouring item by 4.9° or 5.1°, depending on the direction and position, such that their rotations appear equal to an imaging device that is aligned with the central item, *i.e.*, an item arranged on the projection axis. Accordingly, the further an item is displaced from the projection axis, the larger its rotational deviation will be from the central item. In this way, the mounted items' poses stay coupled across the projection space, for instance, when a broad angle projection image is acquired (*e.g*., a single image containing a plurality of items), in which case an equal rotation of items could break the equal pose coupling and/or increase complexity of the image data processing.

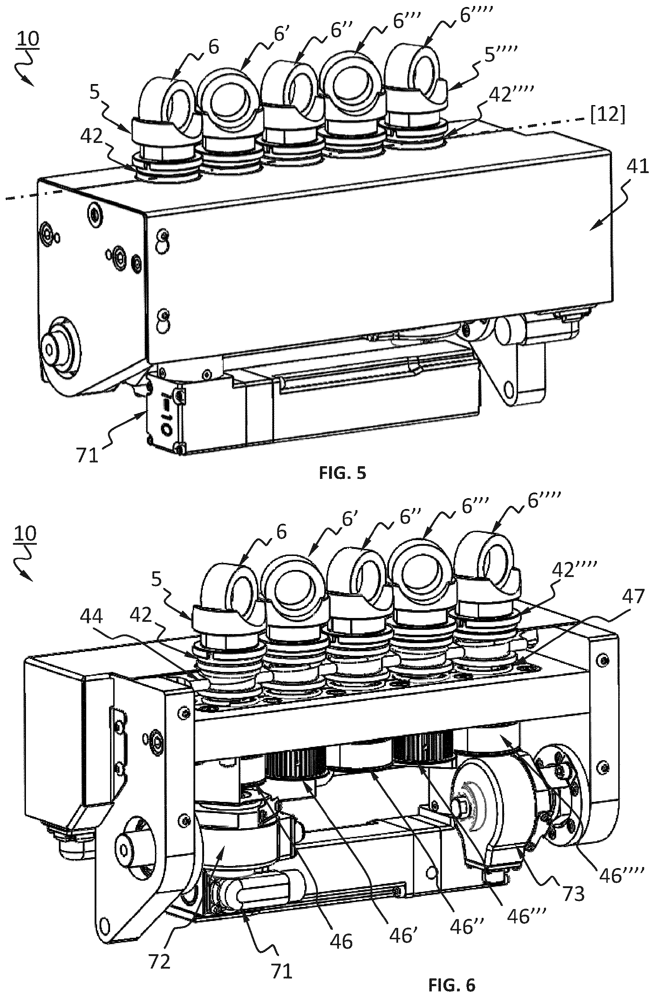

In any of the above discussed embodiments, schematic drawings were discussed to explain the disclosed technology more easily. However, to better appreciate the advantages of the apparatus various practical implementations will be discussed next. For example, **Figure 5** illustrates a practical implementation of the apparatus 10, that comprises a casing 41 to shield the interior components during movement.

As shown in **Figure 5****,** the casing 41 can have a plurality of apertures, arranged for example, on the top surface, so to provide access to the plurality of mounting slots 4. The plurality of mounts 5 can be inserted into the plurality of apertures so as to releasably couple with the manipulator, as explained earlier. Preferably the apertures can be arranged to form a plurality of passages extending towards the plurality of rotatable members 45, that are arranged in the interior of said casing 41.

In some embodiments the plurality of mounting slots can be arranged linearly along a particular axis of the manipulator so that the rotatable members can be rotated within the same plane, transverse to said particular axis. For example, in **Figure 5** the mounting slots 42 are arranged linearly along the longitudinal axis 12 of the manipulator. The mounting slots 42 are mounted in the apertures provided in the top surface of the manipulator, which are, therefore, also aligned along the same longitudinal axis 12. In this way the positioning of items in the projection space can be simplified, for example, a repositioning of an item along the projection axis, as previously discussed for **Figure 1****,** can be realised by moving the manipulator (linearly) along its longitudinal axis.

The arrangement of the internal components of the apparatus 10 is discussed further with reference to **Figure 6**, which shows the embodiment of **Figure 5** that has the front part of the casing 41 removed to reveal the interior. In this figure, the compactness of the apparatus 10 can be better appreciated. In particular, the mounts are shown to be arranged in (very close) proximity to each other, therefore, maximising the space available on the manipulator top surface, for instance, for mounting the items closer together. Preferably the mounting slots are arranged in a contiguous manner so that the distance between the plurality of mounts 5 is minimised, hence, also minimising the distance between the plurality of mounted items 6. As explained earlier, the close arrangement of the mounts can be realised (in part) through the implementation of a rotatable coupling and (in part) through the separate arrangement of the actuator 71, which is discussed next.

**Figure 6** shows that the actuator 71 can be arranged on the underside of the apparatus 10 so that the design can be made more compact still. This leaves sufficient room for all the components of the actuator, such as the motor to drive the actuation, a control device and optional gearing for transferring the power and movement generated by the motor to the actuated elements, for example, a rotatable member and/or a rotatable coupling means. The actuator may be controlled by a control signal provided to the manipulator, directly or indirectly, from a control unit operatively connected to the apparatus. There are different (electric) actuator technologies known in the art and the skilled person is aware of how to realise the above-described functionality based on, such as, for example, electromechanical actuators, linear / rotary motors, and so on.

In any of the above embodiments, the apparatus may comprise a means for tracking the rotation of at least one rotatable member. For example, as further shown in **Figure 6****,** an encoder 72 may be arranged between the actuator 71 and the coupled rotatable member 45. Similarly to the actuator, various encoder technologies are known in the art, although advantageously a rotary incremental encoder may be considered to report position changes continuously and accurately. Advantageously, the encoder is arranged to track the rotation of the actuated rotatable member, i.e., the rotatable member that is actuated by the actuator, or any part thereof.

In some embodiments, the apparatus can comprise a tilting means 73, that is configured to tilt the manipulator 4 or part thereof relative to the central projection axis 32 such that the tilt of at least one item can be adjusted, for instance, to acquire a projection image of a different viewing angle and/or zoom level be required. For example, as shown in **Figure 6****,** a rotary actuator 73 may be arranged at a side of manipulator, that is configured to rotate about axis parallel to the longitudinal axis 12 of the manipulator, so that the manipulator or part thereof can be tilted. The tilt can be measured as a function of the tilt angle θ between the manipulator's transverse axis 13 and the projection axis 24. During standard operation the tilt angle θ is 0°, which indicates that the manipulator's transverse axis 13 is aligned with the projection axis 24, for example, as shown in **Figure 1****.**

In some embodiments, the apparatus can comprise a rotational stabilising means, that is configured to stabilise the rotatable members during rotation. For example, as shown in **Figure 6****,** a plurality of bearings 47, such as (precision) ball bearings, can be arranged around at least part of the rotatable member 45. For instance, in the shown embodiment the rotatable members 45 comprise a shaft and the ball bearings 47 are arranged between the item mounts 5 and actuator 71 so that part of the shaft of the rotatable member passes therethrough. In this way, the rotational accuracy and performance of the rotatable members can be improved.

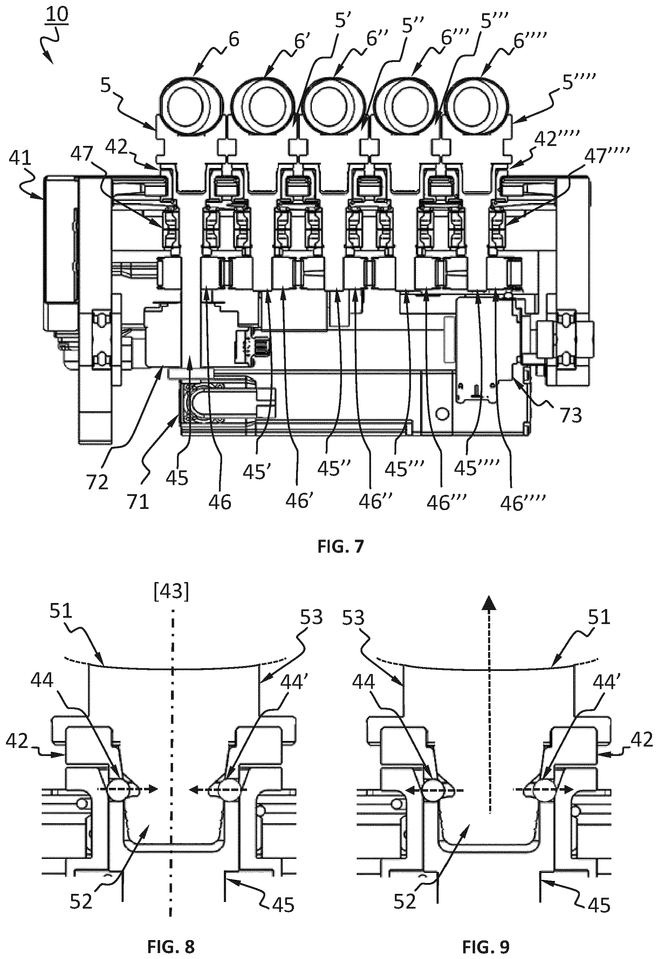

The rotatable coupling is discussed further with reference to **Figure 7****,** which shows a cross-section of the embodiment of **Figure 6**. More specifically, the five mounts 5-5ʺʺ are shown to be each releasably coupled into a corresponding mounting slots 42-42ʺʺ, that connects the mounts to a corresponding rotatable member 45-45ʺʺ. In this embodiment, the first rotatable member 45 is directly driven by the actuator 71, arranged at an underside of the apparatus 10. The rotation of the driven rotatable member 45 can be transferred to the adjacent, second rotatable member 45' through the connection between their corresponding coupling means 46-46', that rotatably couple said rotatable members 45-45' together.

Similarly, the rotation of the second rotatable member 45' can then be transferred to the next, e.g. third rotatable member 45" through the connection between their coupling means 46'-46", and so on for the fourth rotatable member 45‴ and fifth rotatable member 45ʺʺ. In this way, every mount 5-5ʺʺ can be simultaneously rotated through its coupling to the corresponding rotatable member 45'-45‴.

As mentioned earlier, the mounts 5 are configured for releasable coupling to the manipulator 4, more specifically at a mounting slot 42 arranged on the manipulator, so that they can freely switch between a coupled state and a released state. Some examples of suitable embodiments of a releasable coupling means are discussed below, although it will be understood that other types of mechanical couplings may be considered also. It should be appreciated that the releasable coupling means is described as comprising separate component for ease of explanation, however, for certain embodiments the releasable coupling means may be integrated to other components of the manipulator, *i.e*., forming a part thereof, for a compacter design.

For example, as shown in **Figure 8****,** the releasable coupling means may comprise a clamping member 44, for example, a spring, that is arranged to clamp the coupling part 52 of the mount against the mounting slot 42 or a driving part of a corresponding rotatable member 45, when it is inserted into the mounting slot 42. The inward movement of the clamping member 44 is indicated with the dashed arrows. The coupling part may advantageously comprise an indentation with a shape that matches the shape and geometry of the clamping member 44 so that it can fit therein. Additionally, the coupling part 52 may have a fitting that matches the shape and/or geometry of the mounting slot 42. Advantageously, the coupling part 52 is tapered so that the coupling part 52 can be easily guided towards the central coupling position to achieve faster coupling.

Further, as shown in **Figure 9****,** the manipulator 4 may be configured to decouple the mount 5 from the mounting slot 42 by pushing it upwards. In this way, the clamping member 44 is pushed back outwards - as indicated with the dashed arrows. Alternatively or in combination, a biasing member may be arranged against the clamping member to improve the decoupling, for instance, by pushing the clamping member away from the coupling part.

In some embodiments the manipulator can comprise an electromagnetic coupling, that is configured to magnetically couple the coupling part to the manipulator, for example, against a driving part of a corresponding rotatable member. This embodiment can be implemented by including a magnetic component in the coupling part or producing the coupling part from a magnetic material.

In some embodiments the manipulator can comprise a pneumatic coupling, that is configured to couple the coupling part to the manipulator, for instance, through by arranging a coupling that connects to a plug-in or nipple that is arranged, for example, in the mounting slot or on a driving part of a corresponding rotatable member.

In some embodiments the manipulator may be configured to controllably decouple the coupling part of at least one mount from corresponding the rotatable members of the manipulator, so that rotation of said mount can be selectively controlled, advantageously stopped. For certain images it is desired that the orientation of the items is aligned, for example, when acquiring broad image containing multiple items, or in another example, when quickly acquiring multiple projection images for inspection by moving the manipulator sideways along the lateral axis.

Hence, by (temporarily) decoupling at least one mount, the other mounts can be rotated to match the orientation of the item mounted on the decoupled mount. This can typically include minor adjustments, such as 0.1°, but may also include major adjustments in case of a major misalignment. Once the items are aligned, the decoupled mount can be coupled again to continue the simultaneous rotational adjustment as described in any of the above embodiments.

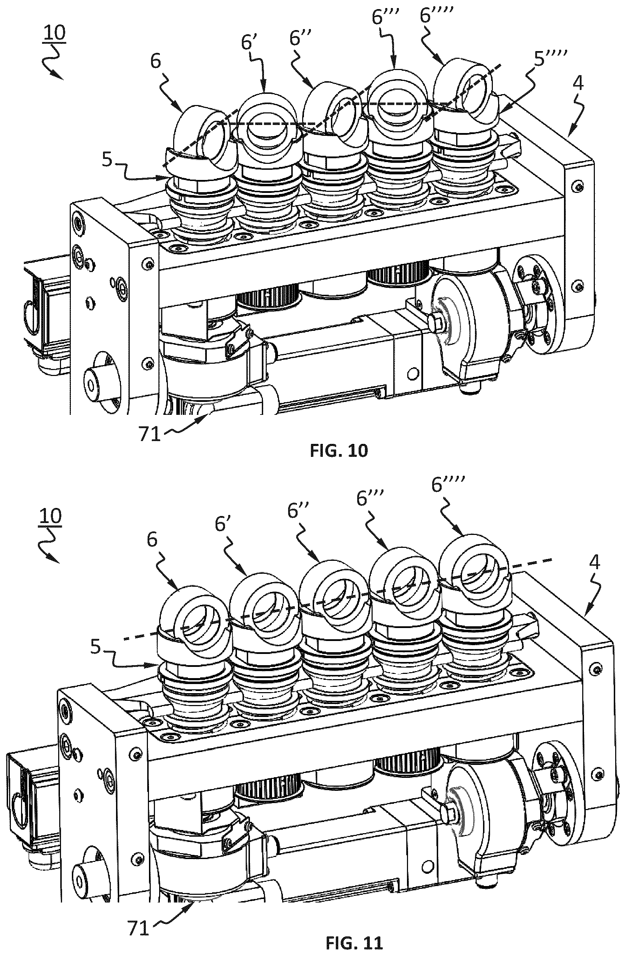

For example, in **Figure 10** an arrangement of a plurality of items 6 mounted on the manipulator 4 is shown that have their orientation randomised, for instance, based on the (random) orientation that the mount 5 was loaded and coupled to the manipulator 4. In this example, the second and fourth mount can be decoupled such that the remaining mounts can be rotated to align all of the items. In this way, the orientation of the items 6 can be aligned, for example, in **Figure 11****.**

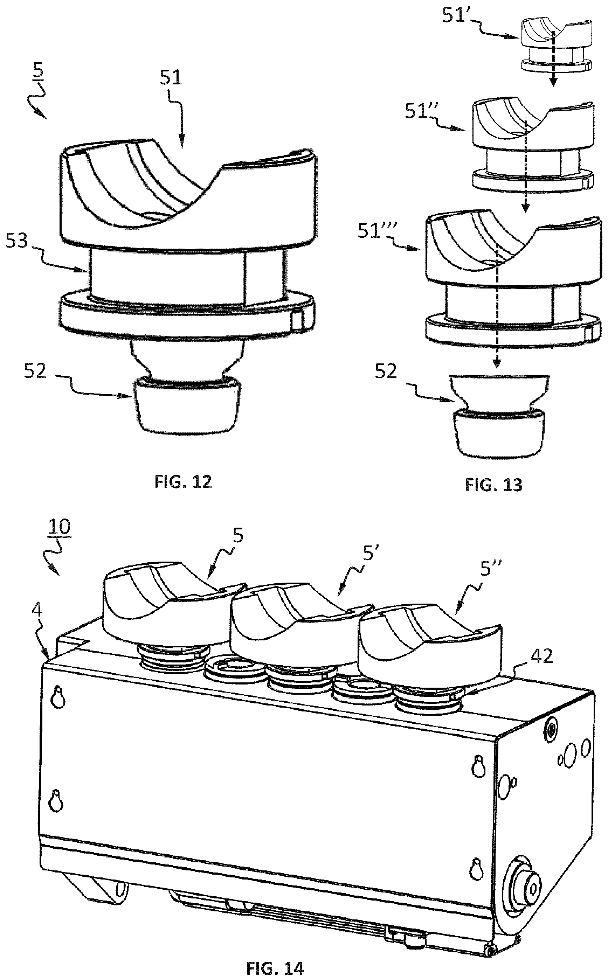

As explained earlier, the mount can have a mounting part for the mounting of at least one item thereon, and a coupling part the releasable coupling to the manipulator. **Figure 12** shows an example of a mount 5, in which the mounting part 51 and the coupling part 52 are arranged on opposite sides. This is advantageous for coupling the mount directly onto a rotatable member of the manipulator, so that a directly driven rotation can be realised.

There are different ways to controllably decouple the mount from the manipulator. For example, in an embodiment the coupling of the mount in the mounting slots may be released, such that the mounts rests loosely in the mounting slots and is not connected to the corresponding rotatable members. In another example, the connection between the rotatable member and mount can be interrupted, for instance, by inserting a blocking member. The preferred controllable decoupling is based on the embodiment used to couple the mounts to the corresponding rotatable members. Hence, although examples are provided, the present technology is not limited to these embodiments.

In some embodiments, the coupling part of the mount can have a fitting that matches the inside shape and/or diameter of the mounting slot and/or rotatable member so that it can be inserted therein. This achieves a more secure coupling mechanism. Advantageously, the fitting is tapered so that the coupling mount can be guided towards the coupling position to achieve a fast coupling. For example, **Figure 12** shows an example of a mount 5 that has a tapered fitting on the coupling part 52**.**

Additionally, the coupling part 52 is shown to have an indentation to allow for easier clamping by a clamping element, as was explained earlier with reference to **Figure 8****.**

In some embodiments, the mounting part of the mount can be detached from the coupling part so that it can be adapted to accommodate a shape / geometry of the item, for example, by switching the mounting part into one that has another shape / geometry. For example, with reference to **Figure 13****,** an embodiment of the mount 5 is shown that has a detachable mounting part. For instance, to accommodate a smaller shape / geometry of an item, the mounting part 51' having the smallest geometry may be selected and connected to the coupling part 52, illustrated below. Similarly, to accommodate a larger shape / geometry of an item, the mounting part 51‴ having the largest geometry may be selected and connected to the same coupling part 52. In this way, the coupling part can be easily reused for inspection of different items, reducing the costs and allowing for higher flexibility in inspection across different fields.

There exists various way to realise a reliable connection between the selected mounting part 51 and the coupling part. For instance, a fitting and receptacle may be provided on the opposing sides of the parts so that one part may be partially inserted into the other. A more reliable can be achieved by fixing a fastener that passes (partially) through the connected parts and is secured at one or both ends. However, the skilled person understands that various connections can be contemplated, and although examples are provided, the present technology is not limited to these examples.

In any of the above embodiments, the size of the mount and mounted item may exceed the space available in the mounting slots. However, as shown in **Figure 14****,** this limitation can be circumvented by skipping one or more mounting slots when mounting the item. More in particular, in the shown embodiment the three mounts 5-5" have a significantly larger diameter than the diameter of the corresponding mounting slots, for example, shown in **Figure 5****.** However, by coupling each mount 5 to every second mounting slot 42, the plurality of larger mounts 5 can still be mounted on the manipulator 4 without blocking each other's movements / rotations. The same reasoning can be applied to even larger mounts, for example, by coupling a mount to every third mounting slots, or every fourth mounting slot, and so on.

In some embodiments, the mount can comprise or be made from a radiation transparent material. Preferably, the mounting part of the mount can comprise or be made from a radiation transparent material. In this way, a projection image can be acquired without the mount blocking regions of the item. The coupling part, for instance, can comprise or be made from a sturdier material that is not or at least only partially radiation transparent.

As discussed earlier, the apparatus can be incorporated in a radiation imaging system for the (automated) handling of one or more provided items, for instance, for the (optimal) positioning of the items in the projection space for acquiring of a projection image thereof. As shown in **Figure** 1, movement of the apparatus 10 can be controlled by a control unit 75 that is operatively connected to the apparatus - indicated by the solid line with bullet endings. Advantageously, the control unit 75 is also connected to the radiation imaging device such that it can control the apparatus based on the received information, for instance, when an image has been acquired.

It should be appreciated that, for the sake of simplicity in explanation, the control system is described as a single unit. However, in practical applications, a control system may typically consist of multiple processing units, each configured to perform specific tasks independently. These processing units are interconnected in a manner that enables them to collaboratively fulfill the designated function of the control system as described herein.

In some embodiments the radiation imaging system may comprise a housing, which partially or more advantageously, completely encloses the radiation imaging device, particularly the inspection chamber, where the radiation imaging device or any of its components may be arranged. It is advantageous that the inspection chamber is impermeably sealed from the external environment to prevent the leakage of radiation into the surroundings.

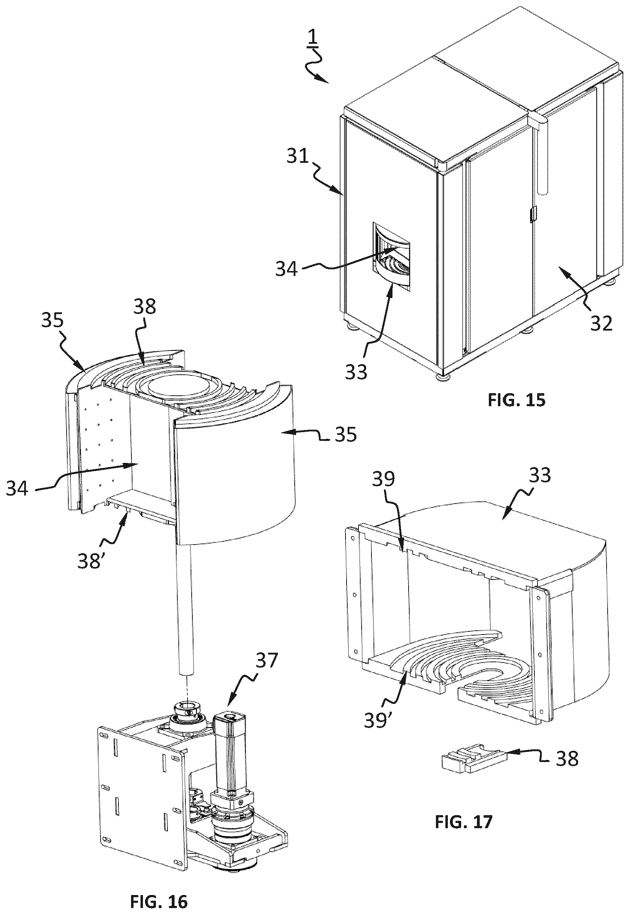

For example, **Figure 15** shows an embodiment of a radiation imaging system 1 comprising a housing that houses the inspection chamber 32, in which the radiation imaging device is arranged, and at least one access port 33 that provides access to said inspection chamber 32. Although not visible in this Figure, it is understood that the apparatus 10 of any of the above embodiments can be arranged inside the radiation imaging system 1 for handling of any items provided through the access port 33. Optionally, the radiation imaging system may comprise another access, such as a door or hatch, that provides access to the system interior, for instance, to perform maintenance. This optional access, however, will remain closed during operation of the system to prevent radiation from escaping outside.

In some embodiments, the access port may comprise a rotatably arranged revolving door and a means for passing items through the access port when the revolving door is rotated. Since the service life of radiation sources decreases when the sources are switched on and off frequently, the source is preferably kept on permanently. As a result, however, when an access port is opened radiation can pass through the opening and escape outside to the surroundings. To prevent this radiation from escaping, the access port can be configured to block any openings when the revolving door is rotated, as will be discussed below.

With reference to **Figure 16****,** an embodiment of the access port is discussed in which the access port 33 comprises a revolving door. More specifically, the access port can comprise a radiation blocking housing and at least one radiation blocking door, that rotatably arranged in said housing, and an actuator 37 configured to actuate a rotation of said door. The housing can have at least two openings, advantageously oppositely arranged (*e.g*. front/rear) so as to form a continuous passage through said housing, although some deviations can be considered, for example, including a sideways opening. The revolving door can comprise a central part 34 and at least two, oppositely arranged, side parts 35, enclosing said central part 34, so that the access port 33 is separated into at least two segments, for example, half cylindrical segments designed to match the size of the openings to block radiation during rotation of the revolving door. The side parts 35 advantageously have a specific width that corresponds to the size and shape of the (front/rear) openings of the housing of the access port 33 so that a continuous overlap can be realised when the revolving door is rotated. Advantageously, the housing of the access port is cylindrical in shape, and the revolving door is designed to match the shape of the housing with the side parts being co-cylindrical in shape to minimize the spacing between the housing of the access port and the revolving door.

The actuator 37 of the access port 33 can be arranged apart from the revolving door. For instance, as shown in **Figure 16****,** the actuator 37 can be arranged underneath the revolving door and drive the rotation of the revolving door through a rotatable element, such as a (hollow) shaft, that connects centrally to the revolving door. In this embodiment the component of the actuator 37 are shown, including the driving motor and a coupling that transfer the power from the motor to the shaft. In this way, actuation of the door can be mechanically simplified to avoid additional openings and ensure proper shielding.

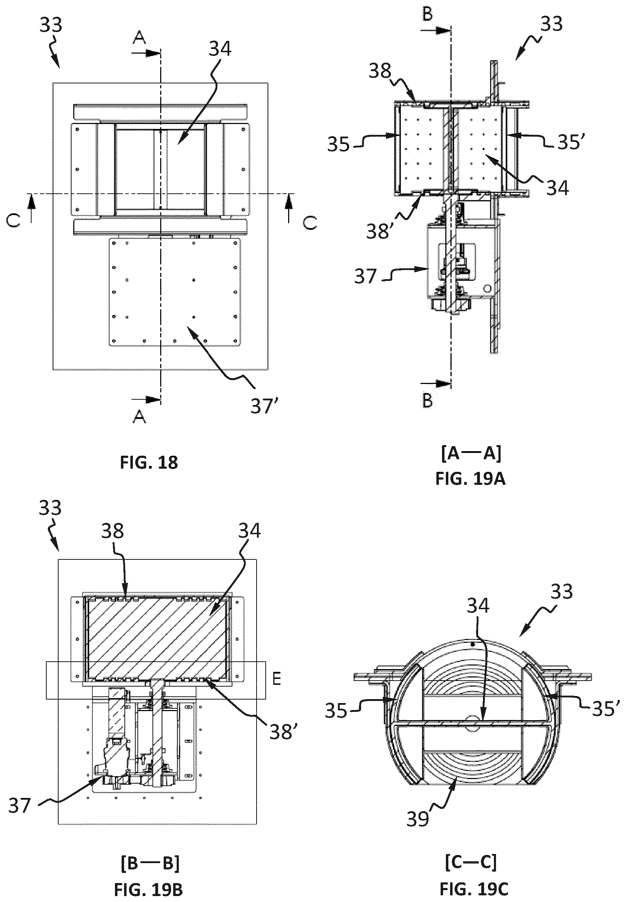

As further shown in **Figure 18****,** the actuator can be arranged in a separate compartment 37', advantageously positioned remote from the revolving door, behind additional shielding to prevent any radiation leakage that could escape above/below the revolving door towards the actuator 37. It is advantageous to provide further shielding in the vicinity of the gaps that are located between the rotating shaft and adjacent stationary surfaces, so that no radiation can escape through these gaps, for instance, into the hollow shaft. **Figure 19A** shows a cross-section of the embodiment of **Figure 18** when viewed along plane [A-A] and **Figure 19B** shows the same when viewed along plane [B-B]. Both embodiments illustrate the arrangement of the actuator 37 and its connection to the previously discussed revolving door 34.

Returning back to **Figure 16****,** an embodiment is shown wherein the access port comprises a plurality of radiation blocking elements 38 that are arranged such that a radiation blocking chicane / labyrinth is formed. Specifically, the housing of the access port is shown to comprise opposing upper and lower surfaces that are arranged adjacent to the revolving door, meaning that the revolving door is arranged between the upper and lower surfaces. Further, a plurality of alternating radiation blocking elements 39-39' is shown to be arranged on opposite surfaces of the access port 33, for example, on the top surface 39 and on the bottom surface 39', that extend orthogonally therefrom.

As shown, the radiation blocking elements 39 can be angled so as to form a number of circles, with varying diameter; although other shapes can be contemplated also. Further, a number of complementary radiation blocking elements 38-38' are arranged on opposite sides of the radiation blocking wall 34, for example, on the top surface 38 and on the bottom surface 38', that match the complementary radiation blocking elements 39-39' arranged on the surfaces of the access port 33. For example, the shape of the elements 39-39' on the surfaces of the access port 33 can have a geometric shape, such as a circle, and the shape of the 39-39' on the surfaces of the revolving door can be paired with the shape of said geometric shape. In this way, when the revolving door 34 is placed into the access port 33, the radiation blocking elements 38 of the access port 33 will match the radiation blocking elements 39 of the revolving door such that they interleave in a manner forming a radiation blocking chicane/labyrinth that blocks radiation during rotation of the revolving door regardless of its rotational position.

In some embodiments, the shape of the elements 39-39' forms a plurality of concentric circles, i.e., circles that share the same centre but have an increasing diameter, the larger circles completely surrounding the smaller circles. An example of such an embodiment is shown, for example, in **Figure 19C****,** which is a cross-section of the embodiment of **Figure 18** when viewed along plane [C-C]. However, the skilled person understands that other shapes may also be suitable, such as concentric ellipses, depending on the length of the access port and the rotatable arrangement of the revolving door therein.

As discussed earlier, the apparatus can be incorporated in a radiation imaging system for the (automated) handling of one or more provided items, for instance, the loading/unloading of provided/inspected item to/from the imaging system. Advantageously, the previously discussed access port may, therefore, comprise a means for passing items through the access port when the revolving door is rotated. Since the complexity of the radiation imaging device increases when a large number of items are provided, the number of manipulators is advantageously limited. As a result, however, the loading cycle, which included the time needed to load new items into the system for inspection and unload already inspected items, is greatly impacted by the loading efficiency. Hence, there is considerable value in improving the loading efficiency.

In some embodiments the radiation imaging system can include a second access port situated in a separate enclosure from the first access port, preferably on the opposite side of the shielded enclosure. In this configuration, the manipulator is designed for easy coupling with the plurality of mounts suspended on the retaining elements of the first access port and releasing these mounts onto the retaining elements of the second access port. This embodiment has the potential to enhance the throughput of the inspection system device by allowing the manipulators to either focus on or alternate between sample loading and unloading cycles, effectively eliminating downtime between consecutive item inspections.

In some embodiments, the radiation imaging system can comprise one or more tracks that establish a connection between the access port and the projection space, serving as a designated pathway for the item handling apparatus to move along. Furthermore, the radiation imaging system may comprise at least two tracks, preferably positioned in parallel or in close proximity to each other. This arrangement allows for multiple item handling apparatuses to be placed on these distinct tracks, enabling each apparatus to efficiently alternate between the access port and the projection space.

Alternatively, or in combination, the one or more tracks can connect a first access port to a second access port, with the additional advantage of passing through the projection space. If multiple tracks are included, at least two item handling apparatuses can be positioned on separate tracks, simplifying the process of transitioning between different access ports and the projection space to enhance overall throughput.

In another embodiment, the radiation imaging system can comprise a looping track that establishes a connection between the access port to the projection space, permitting the item handling apparatus to follow a continuous path in a single direction. Additionally, one or more additional item handling apparatuses can be situated on the same looping track, all following the same direction as the first item handling apparatus without causing interference between them. This configuration effectively eliminates downtime between consecutive item inspections.

Alternatively, or in combination, the radiation imaging system may include a second access port positioned along the looping track, allowing the one or more item handling apparatuses to follow a preprogrammed route from one access port to another access port, with the additional advantage of passing through the projection space, enabling each apparatus to efficiently alternate between the access port and the projection space.

In some embodiments, the access port may comprise a retaining element configured to retain one or more mounts, preferably in one or more retaining slot. Preferably, the mount may comprise a retaining part that is adapted to match shape and geometry of the retaining element so that it can be suspended thereon, preferably matching the shape and geometry of the retaining slots. For instance, in some embodiments the retaining element may have a pair of oppositely arranged members, such as hooks or bars, that together form a retaining slot, wherein the distance between said pair of members matches the shape and geometry of the retaining part of the mount. Advantageously the oppositely arranged members may extend orthogonally from a section of the lock, such as a wall. Alternatively or in combination, the retaining element may be a plate comprising a plurality of openings forming retaining slots that have a shape and geometry that matches the retaining part of the mount.

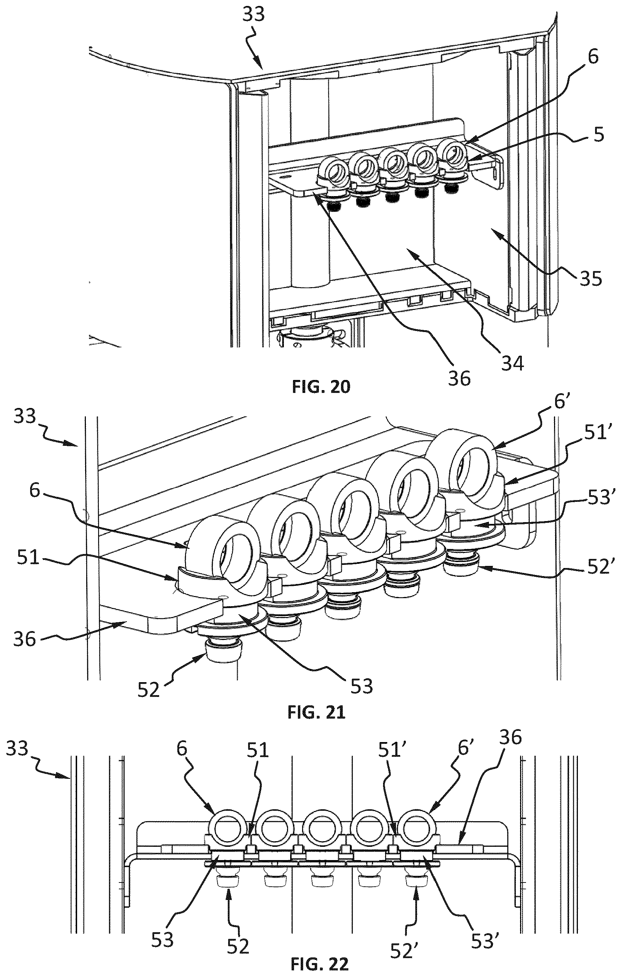

For example, with reference to **Figure 20** an embodiment of the retaining element 36 is discussed, that can be arranged in an access port 33 such as, for example, an access port 33 comprising a revolving door 34 of any of the above embodiments. As shown, the retaining element 36 can comprise a support plate that is fixed in the access port 33, the support plate further comprising a plurality of slots that have a shape and size corresponding to a central portion of the mount 5, more specifically, the retaining part 53. The mounts 5 are shown to be retained onto the support plate in a suspended manner.

**Figure 21** is a close-up view of the retaining element 36 of **Figure 20****.** It is shown that the slots are formed such that a plurality of retaining members is formed that can engage with a portion of the retaining part 53 of the retained mounts 5. More specifically, the mounts are adapted to have a portion with a narrower shape / geometry along the middle, between the mounting part 51 and the coupling part 52. In this way, the retaining part 53 can have a fitting that matches the interior shape of the slots of the retaining element 36 such that it can be retained in a suspended manner when it engages therewith. **Figure 22** shows the embodiment of **Figure 21** in a front view.

In any of the above embodiments, the item handling apparatus can be configured to securely couple with the plurality of mounts by engaging the retaining elements, preferably in a direction that is substantially perpendicular to the retaining element and/or in a predominantly vertical direction. This action fits the coupling part of the mounts into the mounting slots. Conversely, it can disengage from the retaining elements, preferably in a direction that is primarily parallel to the retaining element and/or in a mostly horizontal direction, thereby removing the mounts from the retaining elements.

Similarly, in any of the above embodiments, the item handling apparatus can be designed to release the plurality of mounts. This is achieved by engaging with the retaining elements, preferably in a direction that is predominantly parallel to the retaining element and/or in a mostly horizontal direction. This action positions the retaining part of the mounts on the retaining element. Subsequently, it disengages from the retaining element, preferably in a direction that is primarily perpendicular to the retaining element and/or in a predominantly vertical direction, thereby suspending the mounts from the retaining elements.

In some embodiments the plurality of retaining elements can be arranged in multiple rows stacked above each other on at least one sidewall of the revolving door, that is in vertical manner. This configuration enables a single manipulator to sequentially couple and release batches of items within a single rotation of the revolving door, thereby enhancing throughput efficiency. In another embodiment, a plurality of manipulators can successively or simultaneously couple and release batches by engaging with a different row of retaining elements.

In some embodiments, the retaining elements may be oriented at a sloped angle, and the manipulator is configured to engage with the retaining elements at a corresponding sloped angle. This sloped configuration of the retaining element can improve the manipulator's reliability in coupling and releasing a mount by eliminating the risk of the mount sliding off from the retaining element. Another advantage is that the sloped angle may enable the accommodation of a greater number of retaining elements within the access port by minimizing the movement space required for the manipulator to securely couple and release the mounts. Advantageously, the retaining elements may be arranged in a diagonal manner, wherein the retaining elements are not directly stacked above each other. The diagonal stacking creates more space for the mount and the manipulator to interact with the mount, further optimizing the efficiency of the design.

In some further embodiments, the retaining elements may be oriented at a sloped angle ranging from at least 30 to at most 60 degrees, more preferably within the range of 40 to 50 degrees, and most preferably at approximately 45 degrees. The slope is measured from the revolving door toward the retaining elements surface, promoting a convenient backward sliding of the suspended mounts toward the revolving door. Optionally, the retaining elements may include a securing mechanism to secure the retaining part of a mount. In a combination of the aforementioned embodiments, the rows of retaining elements can be aligned at varying slopes.

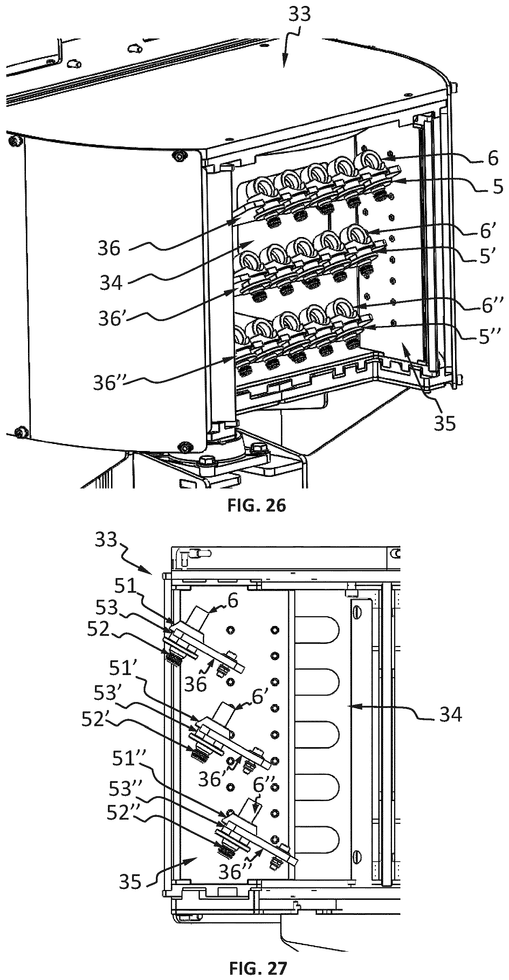

For example, referring **Figure 26****,** an embodiment of an access port 33 is discussed, comprising multiple stacked retaining elements 36. These retaining elements include a first row of retaining elements 36, a second row of retaining elements 36', and a third row of retaining elements 36". It is understood that modifications to this configuration can be implemented, such as limiting it to two rows or expanding it to include four or more rows. This arrangement allows for the stacking of multiple rows of mounts 5, each holding a mounted item 6, in a suspended manner.

**Figure 27** provides a side view of the access port 33 depicted in **Figure 26****.** In this embodiment, the orientation of the retaining elements 36 at a 45-degree angle is clearly visible. Specifically, in the first retaining element 36, the mount 5 is suspended by its retaining part 53 within a slot of the retaining element 36, leaving the coupling part 52 readily accessible. The same configuration is applied to the second row of retaining elements 36' and the third row of retaining elements 36". Additionally, the revolving door may feature multiple fixing points that facilitate the adjustment of the position and orientation of the retaining elements 36. This adaptability enables the configuration to be tailored to the size and volume of the items, optimizing the use of available space within the access port 33. Advantageously, the rows of retaining parts 53 are arranged to provide sufficient space for the manipulator to readily access each of the multiple rows of retaining elements in any desired sequence.

In some embodiments the access port may include a loading module featuring the aforementioned plurality of retaining elements, which are advantageously securely fixed to the loading module. The loading module is designed to be detachably coupled to at least one side of the revolving door, allowing for the removal of the loading module, along with any mounts suspended on the retaining elements, from the revolving door. This, in turn, facilitates the optional attachment of another loading module. This arrangement offers the advantage of further increasing loading and unloading efficiency by attaching mounts pre-loaded onto a load module onto the revolving door. More specifically, this approach allows for separate pre-loading, resulting in a reduced error rate during the loading and unloading of items at very high throughput speeds.

In any of the above-described embodiments, the access port can be configured for second pass verification, which involves a validation step that occurs subsequent to the initial loading of items into the access port. This setup offers the advantage of detecting errors or inaccuracies that may have occurred during the initial loading or unloading phase. More precisely, mounts with items mounted thereon can remain suspended on one or more rows of retaining elements while the system carries out the requisite steps of second pass verification. Simultaneously, the system can load or unload mounts containing verified or processed items from one or more of the remaining rows of retaining elements. This approach allows for a thorough validation process without interrupting the loading or unloading operations for the items that have already been verified, ensuring a smoother and more reliable workflow.

In some embodiments, the access port can be configured for internally storing at least one mounts having a reference item mounted thereon. The reference item can be utilised by the system for verification or calibration purposes. For example, the reference item can be used to generate one or more reference images representing a defect free item or a specific defect. Alternatively, the reference item can be used to calibrate the radiation imaging device, ensuring accurate and reliable results. The reference item can therefore be loaded by the item inspection system, typically at specified intervals (for example, after a predefined number of inspection),during an ongoing batch-inspection cycle. The configuration of the access port in any of the above embodiments allows for convenient storing of such a reference item between inspection cycles.

Another aspect of the present disclosure relates to a method of inspecting a plurality of items, preferably by a system as described in any aspect thereof, the method comprising the steps of:
- mounting a plurality of items on mounts;
- suspending the mounts from retaining elements arranged on an access port;
- rotating a revolving door of the access port until the mounts are positioned within the system;
- releasably coupling the mounts to an item handling apparatus;
- positioning at least one item within a projection space to acquire one or more projection images thereof;
- positioning the mounts back onto the retaining elements of the access port;
- releasing the mounts from the item handling apparatus, thereby suspending the mounts from the retaining elements;
- rotating the revolving door of the access port until the mounts are positioned outside of the system;
- optionally, removing the mounts and items from the retaining elements; and,
- optionally, repeating the preceding steps for one or more further plurality of items.

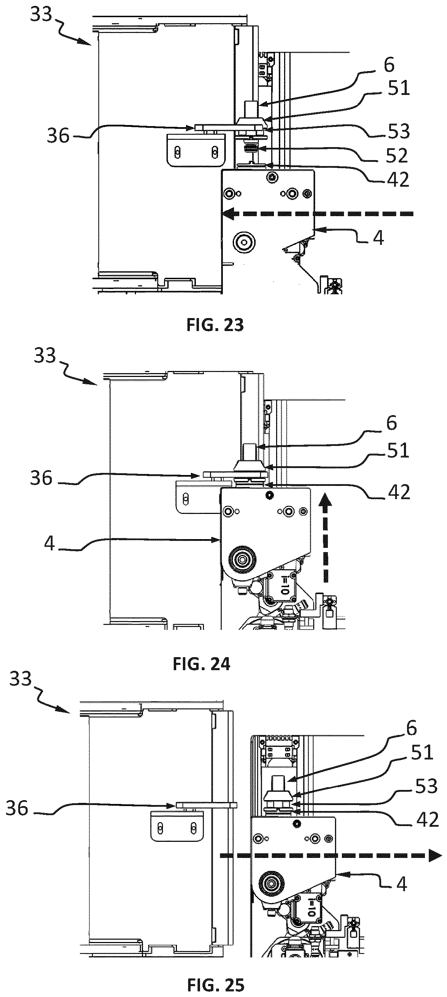

In any of the above embodiments, the mounts can be retained in a way that the coupling part is freely accessible by a manipulator. Hence, the manipulator can freely engage with the coupling part of the mount to couple therewith and remove the suspended mounts from the retaining element. In this way a reliable and fast loading/unloading method can be realized. An example of such an embodiment was discussed earlier with reference to **Figures 20-22****.** It should be noted that any system embodiments or methods of item manipulation also constitute methods for using the system or manipulating items. An embodiment of this method will be discussed below with reference to **Figures 23-25****.**

**Figure 23** depicts the initial step of the method, wherein the mount 5 is securely held within a retaining slot provided in a retaining element 36 affixed to a section of the lock access port 33, such as a wall. The mount is held in place by its retaining part 53, situated between the mounting part 51 (top) where an item is affixed, and the coupling part 52 (bottom). Consequently, the coupling part 52 remains suspended within the lock access port 33. Additionally, the manipulator 4 is shown moving towards the lock access port - as indicated by the leftward arrow - until a corresponding mounting slot 42 is positioned beneath the coupling part 52 of the mount.

**Figure 24** illustrates the subsequent step of the method, during which the manipulator 4 is moved towards the mount 5 - as indicated by the upward arrow - to engage with the mount 5. More specifically, the manipulator 4 is oriented in a manner that allows the coupling part 52 to be inserted into the corresponding slot 42, establishing a coupling between them, as previously discussed. The movement of the manipulator 4 can be halted, for instance, once the coupling is successfully established, to prevent any damage to the components.

**Figures 25** presents the final step of the method, in which the manipulator 4 is moved away from the mount 5 - as indicated by the rightward arrow - to remove the mount 5 from the retaining element 36. Although not visible in this illustration, the retaining element 36 is open on the front side, forming a slot, thereby allowing the coupled mount to be easily extracted by the manipulator.

In any of the above embodiment, the retaining of a mount by its retaining part in a way that the coupling part is loosely suspended allows for easy connection by the manipulator from underneath the suspended mount. In this way, the loading efficiency can be improved in a reliable manner.

In addition to the above embodiment, it is understood that the same method can be reversed to realise an unloading method, for instance, to remove inspected items from the system. To clarify, the mounts 5 can be retained by engaging the manipulator 4 holding a coupled mount 5 towards an empty retaining slot of the retaining elements 36 *(i.e*., the reverse of **Figure 25****),** next lowering the manipulator 4 to release the coupling part 52 of the mount and fixing the mount in a suspended manner on the retaining elements 36 (*i.e.*, the reverse of **Figure 24****),** and lastly moving the manipulator 4 away from the retaining elements 36 (*i.e*., the reverse of **Figure 23****).**

In some embodiments the handling apparatus releasably couples the mounts by engaging the retaining elements, preferably in a direction that is substantially orthogonal to the retaining element and/or a vertical direction, thereby fitting the coupling part of the mounts into the mounting slots, and disengaging from the retaining element, preferably in a direction that is substantially parallel to the retaining element and/or a horizontal direction, thereby removing the mounts from the retaining elements.

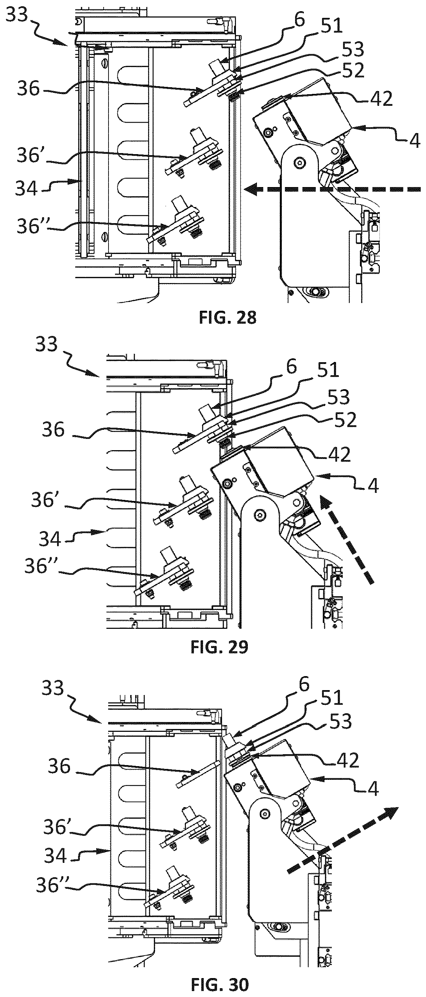

In some embodiments the item handling apparatus releases the mounts by engaging the retaining elements, preferably in a direction that is substantially parallel to the retaining element and/or a horizontal direction, thereby positioning the retaining part of the mounts on the retaining element, and disengaging from the retaining element, preferably in a direction that is substantially orthogonal to the retaining element and/or a vertical direction, thereby suspending the mounts on the retaining elements. As previously described, in one embodiment of the inspection system, a plurality of retaining parts can be arranged in stacked rows on a wall of the revolving door, with the retaining elements oriented at a sloped angle. An example of such an embodiment was discussed earlier with reference to **Figures 26-27****.** The manipulator can effectively engage with the mount's coupling part to attach and remove suspended mounts from the retaining element by aligning with the retaining element at a corresponding sloped angle. A corresponding embodiment of the described method will be discussed below with reference to **Figures 28-30****.**

**Figure 28** illustrates the initial step of the method. In this step, a first set of mounts 5 is secured within multiple slots of a first row of retaining elements 36, which are affixed to a part of the access port 33, such as a wall of the revolving door. Each mount is held in place by its retaining part 53, positioned between the mounting part 51 (top) where an item is mounted, and the coupling part 52 (bottom). Consequently, the coupling part 52 remains suspended within the access port 33. Meanwhile, the manipulator 4 is shown moving towards the access port, as indicated by the leftward arrow, until a corresponding mounting slot 42 is positioned beneath the coupling part 52 of the mount. The manipulator tilts the upper part containing the mounting slots 42 until it matches the angle of the retaining element. This tilting action can occur either before or after positioning the manipulator underneath the coupling part 52.

**Figure 29** illustrates the subsequent step in the method, wherein the manipulator 4 is moved diagonally towards the mount 5, as indicated by the left-upward arrow, to engage with the mount 5. More specifically, the manipulator 4 is oriented in a manner such that the coupling part 52 is inserted into the corresponding slot 42, resulting in a successful coupling, as previously discussed. Movement of the manipulator 4 can be stopped, for example, once the coupling is successful to avoid damaging any of the components. The manipulator's movement corresponds to the angle of the retaining element 36.

**Figure 30** illustrates the final step in the method, where the manipulator 4 is moved diagonally away from the mount 5, as indicated by the right-upward arrow, to remove the mount 5 from the retaining elements 36. Although not visible in this drawing, the retaining slot is open on the front side, allowing the coupled mount to be easily removed by the manipulator. It should be noted that the steps described above can be repeated for each of the multiple rows of retaining elements in any sequence. For instance, the first row may be configured to initially engage with the first (top) row of retaining elements and proceed downward. Alternatively, it may commence by interacting with the third (bottom) row of retaining elements and proceed upward. Another option is to start with the second (middle) row of retaining elements, or whichever further row is included in the specific embodiment of the access port.

In a combination of the above embodiment, the loading/unloading method may be implemented on a revolving door, as previously discussed. Retaining of the mount on a retaining element is particularly suitable for a revolving door because the mount can remain firmly retained during rotation. Additionally, by incorporating a pair of retaining elements on opposite sides of the door, the inspected items can be replaced during inspection of the newly provided items, allowing for a synchronised loading/unloading of the items. Advantageously the method is performed for a plurality of items mounted on a plurality of mounts, wherein the plurality of mounts holding the plurality of items is simultaneously suspended on a plurality of retaining elements, simultaneously detachably coupled with the item handling apparatus, and/or simultaneously released from the item handling apparatus.

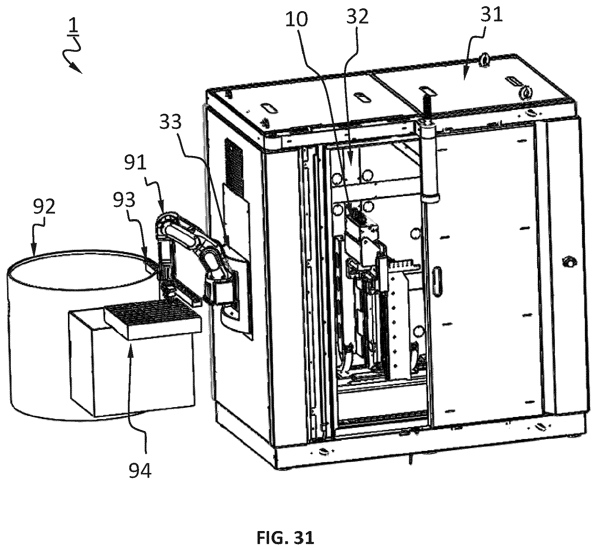

In some embodiments the system may comprise a loading apparatus configured for loading of the plurality of items into the radiation imaging system 1, preferably loading the plurality of mounts 5 into the access port 33. An example of a loading system is discussed with reference to **Figure** 31, which shows an embodiment of a loading apparatus 91 that configured to load an item into the system 1 in order to be inspected therein. The loading apparatus 91 may load items sequentially, *i.e*., one by one, into the access port 33. Alternatively, the loading apparatus 91 may load items batchwise, *i.e*., per batch, into the housing interior. Although an example of a robotic arm is shown to load the items, other devices may be considered also.

As further shown in **Figure 31**, the loading apparatus may comprise a drum feed 92 that arranges the provided items in a way that is suitable for loading, for example, according to a particular orientation.

The drum feeder 92 connects to an item holder 93 that holds the items to be loaded into the system 1. The loading apparatus 91 can take an item from the holder 93 and load it into the system 1, for example, by placing it into the access port 33. Moreover, the robotic arm can unload an inspected item from the access port 33 by placing it into another holder 94 that holds the items that have been inspected. The items may be arranged in a particular way to keep track of their inspection order.

In some embodiments the system can comprise a conveyor device, for example, a conveyor belt, that is configured for conveying the plurality of items, preferably mounted on a plurality of mounts to the radiation imaging system, preferably the loading system.

Reference throughout this specification to "one embodiment" or "an embodiment" means that a particular feature, structure or characteristic described in connection with the embodiment is included in at least one embodiment of the present disclosure. Thus, appearances of the phrases "in one embodiment" or "in an embodiment" in various places throughout this specification are not necessarily all referring to the same embodiment.

As used herein, the terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" when referring to recited members, elements or method steps also include embodiments which "consist of" said recited members, elements or method steps. The singular forms "a", "an", and "the" include both singular and plural referents unless the context clearly dictates otherwise.

As used herein, relative terms, such as "left," "right," "front," "back," "top," "bottom," "over," "under," etc., are used for descriptive purposes and not necessarily for describing permanent relative positions. It is to be understood that such terms are interchangeable under appropriate circumstances and that the embodiment as described herein are capable of operation in other orientations than those illustrated or described herein unless the context clearly dictates otherwise.

Objects described herein as being "adjacent" to each other reflect a functional relationship between the described objects, that is, the term indicates the described objects must be adjacent in a way to perform a designated function which may be a direct (*i.e.* physical) or indirect (*i.e.* close to or near) contact, as appropriate for the context in which the phrase is used.

Objects described herein as being "connected" or "coupled" reflect a functional relationship between the described objects, that is, the terms indicate the described objects must be connected in a way to perform a designated function which may be a direct or indirect connection in an electrical or nonelectrical (*i*.*e*. physical) manner, as appropriate for the context in which the term is used.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, the term "about" is used to provide flexibility to a numerical value or range endpoint by providing that a given value may be "a little above" or "a little below" said value or endpoint, depending on the specific context. Unless otherwise stated, use of the term "about" in accordance with a specific number or numerical range should also be understood to provide support for such numerical terms or range without the term "about". For example, the recitation of "about 30" should be construed as not only providing support for values a little above and a little below 30, but also for the actual numerical value of 30 as well.

The recitation of numerical ranges by endpoints includes all numbers and fractions subsumed within the respective ranges, as well as the recited endpoints. Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the disclosure described herein are capable of operation in other sequences than described or illustrated herein.

Reference in this specification may be made to devices, structures, systems, or methods that provide "improved" performance (*e.g*. increased or decreased results, depending on the context). It is to be understood that unless otherwise stated, such "improvement" is a measure of a benefit obtained based on a comparison to devices, structures, systems or methods in the prior art. Furthermore, it is to be understood that the degree of improved performance may vary between disclosed embodiments and that no equality or consistency in the amount, degree, or realization of improved performance is to be assumed as universally applicable.

In addition, embodiments of the present disclosure may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic based aspects of the present disclosure may be implemented in software (*e.g*., instructions stored on non-transitory computer-readable medium) executable by one or more processing units, such as a microprocessor and/or application specific integrated circuits. As such, it should be noted that a plurality of hardware and software-based devices, as well as a plurality of different structural components may be utilized to implement the technology of the present disclosure. For example, "servers" and "computing devices" described in the specification can include one or more processing units, one or more computer-readable medium modules, one or more input/output interfaces, and various connections connecting the components.

## Claims

1. Radiation imaging system (1) for inspecting a plurality of items (6), comprising:
- a radiation imaging device comprising at least one source (21) and at least one detector (22) defining a projection space (23) between them;
- a shielded enclosure (31), delimited by enclosure walls that define an interior arranged for housing the radiation imaging device, wherein the enclosure walls are configured to block radiation transmission;
- at least one access port (33), arranged within one of the enclosure walls, comprising a housing with at least two openings forming a passage therethrough, at least one internally revolving door rotatably arranged within the housing, and an actuator (37) for rotating the revolving door;
- at least one item handling apparatus (10) comprising a plurality of mounts (5) and a manipulator (4) having a plurality of mounting slots (42) adapted for receiving the plurality of mounts (5);
wherein the manipulator (4) is moveably arranged within the radiation imaging system (1); wherein each of the mounts (5) comprises a mounting part (51) adapted for mounting of at least one item (6) thereon, and a coupling part (52) adapted for releasably coupling to the manipulator (4) at one of the mounting slots (42);
- wherein the access port (33) further comprises a retaining element (36) arranged on at least one side of the revolving door; wherein each mount (5) further comprises a retaining part (53), arranged between the mounting part (51) and the coupling part (52), capable of engaging with the retaining element (36) to suspend the mount (5) while leaving the coupling part (52) accessible to the item handling apparatus (10);
- wherein the item handling apparatus (10) is configured for
- releasably coupling with the plurality of mounts (5) suspended on the retaining element (36) by engaging with the coupling part (52);
- releasing the plurality of mounts (5) when placed onto the retaining element (36) by disengaging from the coupling part (52); and,
- positioning at least one of the plurality of items (6) mounted on the mounts (5) within the projection space (23) for acquiring one or more projection images thereof.

2. The system (1) according to claim 1, wherein the item handling apparatus (10) is configured for:
- releasably coupling with the plurality of mounts (5) by engaging the retaining element (36) in a direction that is substantially orthogonal to the retaining element (36), thereby fitting the coupling part (52) of the mounts (5) into the mounting slots (42), and
disengaging from the retaining element (36) in a direction that is substantially parallel with the retaining element (36), thereby removing the mounts (5) from the retaining elements (36).
and/or
- releasing the plurality of mounts (5) by engaging the retaining elements (36) in a direction that is substantially parallel to the retaining element (36), thereby positioning the retaining part (53) of the mounts (5) on the retaining element (36), and
disengaging from the retaining element (36) in a direction that is substantially orthogonal to the retaining element (36), thereby suspending the mounts (5) on the retaining elements (36).

3. The system (1) according to any one of the preceding claims, wherein the retaining element (36) comprises at least one retaining slot; and wherein the retaining part (53) of the mount (5) is designed with a fitting matching the shape of the retaining slot.

4. The system (1) according to any one of the preceding claims, wherein the retaining element (36) is oriented at a sloped angle and the item handling apparatus (10) is configured to engage with the retaining part (53) of the mount (5) suspended on the retaining element (36) by engaging at the corresponding sloped angle;
preferably wherein the retaining element (36) is oriented at a slope of at least 30 degrees to at most 60 degrees, more preferably 40 degrees to 50 degrees, and most preferably about 45 degrees.

5. The system (1) according to any one of the preceding claims, wherein the access port (33) further comprises a loading module comprising the at least one retaining element (36), preferably the plurality of retaining elements (36), fixedly arranged on the load module;
wherein the loading module is configured to detachably couple to at least one side of the revolving door, thereby allowing for the detachment of the loading module, along with any mount (5) suspended on the retaining element (36), from the revolving door, and optional attachment of another loading module.

6. The system (1) according to any one of the preceding claims, wherein the revolving door comprises at least one central part (34) and at least two, preferably angled, oppositely arranged side parts (35,35'), designed to match the size of the openings to block radiation during rotation of the revolving door;
wherein preferably the housing of the access port (33) is cylindrical in shape, and the revolving door is designed to match the shape of the housing with the side parts (35, 35') being co-cylindrical in shape to minimize the spacing between the housing of the access port (33) and the revolving door.

7. The system (1) according to any one of the preceding claims, wherein the housing of the access port (33) comprises opposing upper and lower surfaces, arranged adjacent to the revolving door;
wherein the upper and lower surfaces comprise at least one, preferably angled, radiation blocking element (39,39'), extending orthogonally from the upper and lower surfaces, and
wherein the revolving door comprises at least one, preferably angled, complementary radiation blocking element (38,38') designed to interleave with the radiation blocking element (39,39') of the adjacent upper and lower surfaces in a manner that blocks radiation during rotation of the revolving door regardless of its rotational position;
wherein preferably the housing comprises a plurality of radiation blocking elements (39,39') and complementary radiation blocking elements (38,38') arranged in an alternating manner with openings between them, wherein the radiation blocking elements (39,39') and complementary radiation blocking elements (38,38') are designed so that a plurality of concentric circles are formed during rotation of the revolving door.

8. The system (1) according to any one of the preceding claims, wherein the manipulator (4) comprises a plurality of rotatable members (45); wherein each rotatable member (45) comprises a driving part configured to engage with the coupling part (52) of at least one of the mounts (5), and a driven part capable of rotation such as to pivot the mount (5) around an axis (43) extending transversely from the mounting slot (42); and, an actuator (7) is configured to induce rotation in at least one of the rotatable members (45).

9. The system (1) according to any one of the preceding claims, wherein the mounting slots (42) are linearly arranged, preferably along a longitudinal axis (12) of the manipulator (4), so that the plurality of mounts (5) can be rotated within the same plane transverse to said longitudinal axis.

10. The system (1) according to any one of the preceding claims, wherein the radiation imaging system (1) comprises at least a second access port (33) arranged within a separate enclosure from the first access port (33), preferably on an opposite side of the shielded enclosure (31);
wherein the manipulator is configured for releasable coupling with the plurality of mounts (5) suspended on the retaining elements (36) of the first access port (33), and releasing the plurality of mounts (5) onto the retaining elements (36) of the second access port (33).

11. The system (1) according to any one of the preceding claims, wherein the radiation imaging system (1) comprises one or more tracks connecting the access port (33) to the projection space, and the manipulator (4) is arranged on the tracks, allowing it to move along them.

12. The system (1) according to any one of the preceding claims, wherein the radiation imaging system (1) comprises at least two tracks, preferably arranged parallel and/or alongside each other, and at least two manipulators, arranged on the different tracks, enabling the manipulators to alternate between the access port (33) and the projection space.

13. Use of the system according to any one of the preceding claims for metrology and/or defect inspection.

14. Method of inspecting a plurality of items (6), comprising the steps of:
- providing a radiation imaging system (1) according any one of the preceding claims;
- mounting at least a plurality of items (6) on a plurality of mounts (5);
- suspending the mounts (5) from a retaining element (36) arranged on a revolving door of an access port (33);
- rotating the revolving door of the access port (33) until the mounts (5) are positioned within an interior of the system (1);
- releasably coupling the mounts (5) to a manipulator (4) of an item handling apparatus (10);
- positioning at least one item of the plurality of items (6) within a projection space (23) to acquire one or more projection images thereof;
- positioning the mounts (5) back on the retaining element (36) of the same or another access port (33);
- releasing the mounts (5) from the manipulator (4), thereby suspending the mounts (5) on the retaining element (36);
- rotating the revolving door of the access port (33) until the mounts (5) are positioned outside of the system (1);
- optionally, removing the mounts (5) from the retaining element (36); and, repeating the preceding steps for one or more further plurality of items (6).

15. The method according to claim 14,
wherein the item handling apparatus (10) releasably couples the mounts (5) by engaging the retaining elements (36) in a direction that is substantially orthogonal to the retaining element (36), thereby fitting the coupling part (52) of the mounts (5) into a plurality of mounting slots (42) on the manipulator (4), and
disengaging from the retaining element (36) in a direction that is substantially parallel to the retaining element (36), thereby removing the mounts (5) from the retaining element (36);
and/or
wherein the item handling apparatus (10) releases the mount (5) by engaging the retaining element (36) in a direction that is substantially parallel to the retaining element (36), thereby positioning the retaining part (53) of the mounts (5) on the retaining element (36), and
disengaging from the retaining element (36) in a direction that is substantially orthogonal to the retaining element (36), thereby suspending the mounts (5) on the retaining element (36).

## Patentansprüche

1. Strahlungsbildgebungssystem (1) zum Inspizieren einer Vielzahl von Objekten (6), umfassend:
- eine Strahlungsbildgebungsvorrichtung, umfassend mindestens eine Quelle (21) und mindestens einen Detektor (22), die einen Projektionsraum (23) zwischen ihnen definieren;
- eine abgeschirmte Einhausung (31), begrenzt durch Einhausungswände, die einen Innenraum definieren, der zur Unterbringung der Strahlungsbildgebungsvorrichtung angeordnet ist, wobei die Einhausungswände dazu konfiguriert sind, eine Strahlungsübertragung zu blockieren;
- mindestens eine Zugangsschleuse (33), die innerhalb einer der Einhausungswände angeordnet ist, umfassend ein Gehäuse mit mindestens zwei Öffnungen, die einen Durchgang durch dieses hindurch bilden, mindestens eine innenliegende Drehtür, die drehbar innerhalb des Gehäuses angeordnet ist, und einen Aktuator (37) zum Drehen der Drehtür;
- mindestens eine Objekthandhabungsvorrichtung (10), umfassend eine Vielzahl von Objektträgern (5) und einen Manipulator (4) mit einer Vielzahl von Anbringungsschlitzen (42), die zur Aufnahme der Vielzahl von Objektträgern (5) ausgebildet sind; wobei der Manipulator
(4) beweglich innerhalb des Strahlungsbildgebungssystems (1) angeordnet ist; wobei jeder der Objektträger (5) ein Anbringungsteil (51), das zur Anbringung mindestens eines Objekts
(6) daran ausgebildet ist, und ein Kopplungsteil (52), das zum lösbaren Koppeln mit dem Manipulator (4) an einem der Anbringungsschlitze (42) ausgebildet ist, umfasst;
- wobei die Zugangsschleuse (33) ferner ein Halteelement (36) umfasst, das an mindestens einer Seite der Drehtür angeordnet ist; wobei jeder Objektträger (5) ferner ein Halteteil (53) umfasst, das zwischen dem Anbringungsteil (51) und dem Kopplungsteil (52) angeordnet ist und in der Lage ist, mit dem Halteelement (36) in Eingriff zu treten, um den Objektträger (5) aufzuhängen und dabei das Kopplungsteil (52) für die Objekthandhabungsvorrichtung (10) zugänglich zu belassen;
- wobei die Objekthandhabungsvorrichtung (10) dazu konfiguriert ist,
- lösbar mit der Vielzahl von Objektträgern (5), die an dem Halteelement (36) aufgehängt sind, zu koppeln, indem sie mit dem Kopplungsteil (52) in Eingriff tritt;
- die Vielzahl von Objektträgern (5) freizugeben, wenn sie auf das Halteelement (36) platziert sind, indem sie außer Eingriff mit dem Kopplungsteil (52) tritt; und,
- mindestens eines der Vielzahl von Objekten (6), die an den Objektträgern (5) angebracht sind, innerhalb des Projektionsraums (23) zu positionieren, um ein oder mehrere Projektionsbilder davon zu erfassen.

2. Das System (1) nach Anspruch 1, wobei die Objekthandhabungsvorrichtung (10) dazu konfiguriert ist,
- lösbar mit der Vielzahl von Objektträgern (5) zu koppeln, indem sie in einer Richtung, die im Wesentlichen orthogonal zu dem Halteelement (36) ist, mit dem Halteelement (36) in Eingriff tritt, wodurch das Kopplungsteil (52) der Objektträger (5) in die Anbringungsschlitze (42) eingepasst wird, und
außer Eingriff mit dem Halteelement (36) in einer Richtung zu treten, die im Wesentlichen parallel zu dem Halteelement (36) ist, wodurch die Objektträger (5) von den Halteelementen
(36) entfernt
werden; und/oder
- die Vielzahl von Objektträgern (5) freizugeben, indem sie in einer Richtung, die im Wesentlichen parallel zu dem Halteelement (36) ist, mit den Halteelementen (36) in Eingriff
tritt, wodurch das Halteteil (53) der Objektträger (5) auf dem Halteelement (36) positioniert wird, und
in einer Richtung, die im Wesentlichen orthogonal zu dem Halteelement (36) ist, außer Eingriff mit dem Halteelement (36) zu treten, wodurch die Objektträger (5) an den Halteelementen
(36) aufgehängt werden.

3. Das System (1) nach einem der vorhergehenden Ansprüche, wobei das Halteelement (36) mindestens einen Halteschlitz umfasst; und wobei das Halteteil (53) des Objektträgers (5) mit einer Passform ausgelegt ist, die zur Form des Halteschlitzes passt.

4. Das System (1) nach einem der vorhergehenden Ansprüche, wobei das Halteelement (36) in einem Schrägwinkel orientiert ist und die Objekthandhabungsvorrichtung (10) dazu konfiguriert ist, mit dem Halteteil (53) des Objektträgers (5), der an dem Halteelement (36) aufgehängt ist, in Eingriff zu treten, indem sie unter dem entsprechenden Schrägwinkel in Eingriff tritt;
vorzugsweise, wobei das Halteelement (36) mit einer Schrägstellung von mindestens 30 Grad bis höchstens 60 Grad, weiter bevorzugt 40 Grad bis 50 Grad und besonders bevorzugt ungefähr 45 Grad orientiert ist.

5. Das System (1) nach einem der vorhergehenden Ansprüche, wobei die Zugangsschleuse (33) ferner ein Lademodul umfasst, das das mindestens eine Halteelement (36), vorzugsweise die Vielzahl von Halteelementen (36), umfasst, welche fest an dem Lademodul angeordnet sind;
wobei das Lademodul dazu konfiguriert ist, abnehmbar an mindestens eine Seite der Drehtür zu koppeln, wodurch das Abnehmen des Lademoduls zusammen mit jedem an dem Halteelement
(36) aufgehängten Objektträger (5) von der Drehtür und das optionale Anbringen eines weiteren Lademoduls ermöglicht werden.

6. Das System (1) nach einem der vorhergehenden Ansprüche, wobei die Drehtür mindestens ein Mittelteil (34) und mindestens zwei, vorzugsweise abgewinkelte, gegenüberliegend angeordnete Seitenteile (35,35') umfasst, die dazu ausgelegt sind, der Größe der Öffnungen zu entsprechen, um Strahlung während der Drehung der Drehtür zu blockieren;
wobei vorzugsweise das Gehäuse der Zugangsschleuse (33) zylindrisch geformt ist und die Drehtür dazu ausgelegt ist, der Form des Gehäuses zu entsprechen, wobei die Seitenteile (35, 35') kozylindrisch geformt sind, um den Abstand zwischen dem Gehäuse der Zugangsschleuse
(33) und der Drehtür zu minimieren.

7. Das System (1) nach einem der vorhergehenden Ansprüche,
wobei das Gehäuse der Zugangsschleuse (33) gegenüberliegende obere und untere Flächen umfasst, die angrenzend an die Drehtür angeordnet sind;
wobei die obere und die untere Fläche mindestens ein, vorzugsweise abgewinkeltes, strahlungsblockierendes Element (39,39') umfassen, das sich orthogonal von der oberen und der unteren Fläche erstreckt, und
wobei die Drehtür mindestens ein, vorzugsweise abgewinkeltes, komplementäres strahlungsblockierendes Element (38,38') umfasst, das dazu ausgelegt ist, mit dem strahlungsblockierenden Element (39,39') der angrenzenden oberen und unteren Flächen derart verschachtelt zu sein, dass Strahlung während der Drehung der Drehtür unabhängig von deren Drehposition blockiert wird;
wobei vorzugsweise das Gehäuse eine Vielzahl von strahlungsblockierenden Elementen (39,39') und komplementären strahlungsblockierenden Elementen (38,38') umfasst, die abwechselnd mit Öffnungen zwischen ihnen angeordnet sind, wobei die strahlungsblockierenden Elemente (39,39')und komplementären strahlungsblockierenden Elemente (38,38') so ausgelegt sind, dass während der Drehung der Drehtür eine Vielzahl von konzentrischen Kreisen gebildet wird.

8. Das System (1) nach einem der vorhergehenden Ansprüche, wobei der Manipulator (4) eine Vielzahl von drehbaren Elementen (45) umfasst; wobei jedes drehbare Element (45) ein Antriebsteil, das dazu konfiguriert ist, mit dem Kopplungsteil (52) mindestens eines der Objektträger (5) in Eingriff zu treten, und ein angetriebenes Teil, das zur Drehung fähig ist, um den Objektträger (5) um eine Achse (43), die sich quer von dem Anbringungsschlitz (42) erstreckt, zu schwenken, umfasst; und, ein Aktuator (7) dazu konfiguriert ist, eine Drehung mindestens eines der drehbaren Elemente (45) zu induzieren.

9. Das System (1) nach einem der vorhergehenden Ansprüche, wobei die Anbringungsschlitze (42) linear angeordnet sind, vorzugsweise entlang einer Längsachse (12) des Manipulators (4), sodass die Vielzahl von Objektträgern (5) innerhalb derselben Ebene quer zu besagter Längsachse gedreht werden kann.

10. Das System (1) nach einem der vorhergehenden Ansprüche, wobei das Strahlungsbildgebungssystem (1) mindestens eine zweite Zugangsschleuse (33) umfasst, die innerhalb einer von der ersten Zugangsschleuse (33) getrennten Einhausung angeordnet ist, vorzugsweise an einer gegenüberliegenden Seite der abgeschirmten Einhausung (31);
wobei der Manipulator dazu konfiguriert ist, lösbar mit der Vielzahl von Objektträgern (5), die an den Halteelementen (36) der ersten Zugangsschleuse (33) aufgehängt sind, zu koppeln und die Vielzahl von Objektträgern (5) auf die Halteelemente (36) der zweiten Zugangsschleuse (33) freizugeben.

11. Das System (1) nach einem der vorhergehenden Ansprüche, wobei das Strahlungsbildgebungssystem (1) eine oder mehrere Führungsbahnen umfasst, die die Zugangsschleuse (33) mit dem Projektionsraum verbinden, und der Manipulator (4) auf den Führungsbahnen angeordnet ist, was es ihm ermöglicht, sich entlang dieser zu bewegen.

12. Das System (1) nach einem der vorhergehenden Ansprüche, wobei das Strahlungsbildgebungssystem (1) mindestens zwei Führungsbahnen, vorzugsweise parallel zueinander und/oder nebeneinander angeordnet, und mindestens zwei Manipulatoren, die auf den verschiedenen Führungsbahnen angeordnet sind, umfasst, was es den Manipulatoren ermöglicht, zwischen der Zugangsschleuse (33) und dem Projektionsraum zu wechseln.

13. Verwendung des Systems nach einem der vorhergehenden Ansprüche für Messtechnik und/oder Fehlerinspektion.

14. Verfahren zum Inspizieren einer Vielzahl von Objekten (6), umfassend die Schritte:
- Bereitstellen eines Strahlungsbildgebungssystems (1) nach einem der vorhergehenden Ansprüche;
- Anbringen mindestens einer Vielzahl von Objekten (6) an einer Vielzahl von Objektträgern (5);
- Aufhängen der Objektträger (5) an einem Halteelement (36), das an einer Drehtür einer Zugangsschleuse (33) angeordnet ist;
- Drehen der Drehtür der Zugangsschleuse (33), bis die Objektträger (5) innerhalb eines Innenraums des Systems (1) positioniert sind;
- lösbares Koppeln der Objektträger (5) mit einem Manipulator (4) einer Objekthandhabungsvorrichtung (10);
- Positionieren mindestens eines Objekts der Vielzahl von Objekten (6) innerhalb eines Projektionsraums (23), um ein oder mehrere Projektionsbilder davon zu erfassen;
- Zurückpositionieren der Objektträger (5) auf dem Halteelement (36) derselben oder einer anderen Zugangsschleuse (33);
- Freigeben der Objektträger (5) von dem Manipulator (4), wodurch die Objektträger (5) an dem Halteelement (36) aufgehängt werden;
- Drehen der Drehtür der Zugangsschleuse (33), bis die Objektträger (5) außerhalb des Systems (1) positioniert sind;
- optional, Entfernen der Objektträger (5) von dem Halteelement (36); und, Wiederholen der vorhergehenden Schritte für eine oder mehrere weitere Vielzahlen von Objekten (6).

15. Das Verfahren nach Anspruch 14,
wobei die Objekthandhabungsvorrichtung (10) die Objektträger (5) lösbar koppelt, indem sie in einer Richtung, die im Wesentlichen orthogonal zu dem Halteelement (36) ist, mit den Halteelementen (36) in Eingriff tritt, wodurch das Kopplungsteil (52) der Objektträger (5) in eine Vielzahl von Anbringungsschlitzen (42) an dem Manipulator (4) eingepasst wird, und
außer Eingriff mit dem Halteelement (36) in einer Richtung tritt, die im Wesentlichen parallel zu dem Halteelement (36) ist, wodurch die Objektträger (5) von dem Halteelement (36) entfernt werden;
und/oder
wobei die Objekthandhabungsvorrichtung (10) den Objektträger (5) freigibt, indem sie in einer Richtung, die im Wesentlichen parallel zu dem Halteelement (36) ist, mit dem Halteelement
(36) in Eingriff tritt, wodurch das Halteteil (53) der Objektträger (5) auf dem Halteelement (36) positioniert wird, und
in einer Richtung, die im Wesentlichen orthogonal zu dem Halteelement (36) ist, außer Eingriff mit dem Halteelement (36) tritt, wodurch die Objektträger (5) an dem Halteelement (36) aufgehängt werden.

## Revendications

1. Système d'imagerie par rayonnement (1) pour inspecter une pluralité d'articles (6), comprenant :
- un dispositif d'imagerie par rayonnement comprenant au moins une source (21) et au moins un détecteur (22) définissant entre eux un espace de projection (23) ;
- une enceinte blindée (31), délimitée par des parois d'enceinte qui définissent un intérieur agencé pour loger le dispositif d'imagerie par rayonnement, dans laquelle les parois d'enceinte sont configurées pour bloquer la transmission du rayonnement ;
- au moins un orifice d'accès (33), agencé à l'intérieur de l'une des parois d'enceinte, comprenant un logement avec au moins deux ouvertures formant un passage à travers celui-ci, au moins une trappe tournante intérieure agencée de manière rotative à l'intérieur du logement, et un actionneur (37) pour faire tourner la trappe tournante ;
- au moins un appareil de manipulation d'articles (10) comprenant une pluralité de supports (5) et un manipulateur (4) ayant une pluralité de fentes de montage (42) conçues pour recevoir la pluralité de supports (5) ; dans lequel le manipulateur (4) est agencé de manière mobile à l'intérieur du système d'imagerie par rayonnement (1) ; dans lequel chacun des supports (5) comprend une partie de montage (51) conçue pour le montage d'au moins un article (6) sur celle-ci, et une partie de couplage (52) conçue pour un couplage amovible au manipulateur (4) au niveau de l'une des fentes de montage (42) ;
- dans lequel l'orifice d'accès (33) comprend en outre un élément de retenue (36) agencé sur au moins un côté de la trappe tournante ; dans lequel chaque support (5) comprend en outre une partie de retenue (53), agencée entre la partie de montage (51) et la partie de couplage (52), susceptible de venir en prise avec l'élément de retenue (36) pour suspendre le support (5) tout en laissant la partie de couplage (52) accessible à l'appareil de manipulation d'articles (10) ;
- dans lequel l'appareil de manipulation d'articles (10) est configuré pour
- se coupler de manière amovible avec la pluralité de supports (5) suspendus à l'élément de retenue (36) en venant en prise avec la partie de couplage (52) ;
- libérer la pluralité de supports (5) lorsqu'ils sont placés sur l'élément de retenue (36) en se dégageant de la partie de couplage (52) ; et
- positionner au moins l'un de la pluralité d'articles (6) montés sur les supports (5) à l'intérieur de l'espace de projection (23) pour acquérir une ou plusieurs images de projection de celui-ci.

2. Système (1) selon la revendication 1, dans lequel l'appareil de manipulation d'articles (10) est configuré pour :
- se coupler de manière amovible avec la pluralité de supports (5) en venant en prise avec l'élément de retenue (36) dans une direction qui est sensiblement orthogonale à l'élément de retenue (36), ajustant de ce fait la partie de couplage (52) des supports (5) jusque dans les fentes de montage (42), et
se dégager de l'élément de retenue (36) dans une direction qui est sensiblement parallèle à l'élément de retenue (36), retirant de ce fait les supports (5) des éléments de retenue (36), et/ou
- libérer la pluralité de supports (5) en venant en prise avec les éléments de retenue (36) dans une direction qui est sensiblement parallèle à l'élément de retenue (36), positionnant de ce fait la partie de retenue (53) des supports (5) sur l'élément de retenue (36), et
se dégager de l'élément de retenue (36) dans une direction qui est sensiblement orthogonale à l'élément de retenue (36), suspendant de ce fait les supports (5) aux éléments de retenue (36).

3. Système (1) selon l'une quelconque des revendications précédentes, dans lequel l'élément de retenue (36) comprend au moins une fente de retenue ; et dans lequel la partie de retenue (53) du support (5) est conçue avec un ajustement correspondant à la forme de la fente de retenue.

4. Système (1) selon l'une quelconque des revendications précédentes, dans lequel l'élément de retenue (36) est orienté selon un angle incliné et l'appareil de manipulation d'articles (10) est configuré pour venir en prise avec la partie de retenue (53) du support (5) suspendu à l'élément de retenue (36) en venant en prise selon l'angle incliné correspondant ;
de préférence dans lequel l'élément de retenue (36) est orienté selon une pente d'au moins 30 degrés à au plus 60 degrés, de manière plus préférée de 40 degrés à 50 degrés, et de manière tout particulièrement préférée d'environ 45 degrés.

5. Système (1) selon l'une quelconque des revendications précédentes, dans lequel l'orifice d'accès (33) comprend en outre un module de chargement comprenant l'au moins un élément de retenue (36), de préférence la pluralité d'éléments de retenue (36), agencés de manière fixe sur le module de chargement ;
dans lequel le module de chargement est configuré pour se coupler de manière détachable à au moins un côté de la trappe tournante, permettant ainsi le détachement du module de chargement, en même temps que n'importe quel support (5) suspendu à l'élément de retenue (36), depuis la trappe tournante, et la fixation optionnelle d'un autre module de chargement.

6. Système (1) selon l'une quelconque des revendications précédentes, dans lequel la trappe tournante comprend au moins une partie centrale (34) et au moins deux parties latérales (35, 35'), de préférence inclinées, agencées de manière opposée, conçues pour correspondre à la taille des ouvertures afin de bloquer le rayonnement pendant la rotation de la trappe tournante ;
dans lequel, de préférence, le logement de l'orifice d'accès (33) est de forme cylindrique, et la trappe tournante est conçue pour correspondre à la forme du logement, les parties latérales (35, 35') étant de forme co-cylindrique afin de minimiser l'espacement entre le logement de l'orifice d'accès (33) et la trappe tournante.

7. Système (1) selon l'une quelconque des revendications précédentes, dans lequel le logement de l'orifice d'accès (33) comprend des surfaces supérieure et inférieure opposées, agencées de manière adjacente à la trappe tournante ;
dans lequel les surfaces supérieure et inférieure comprennent au moins un élément de blocage de rayonnement (39, 39'), de préférence incliné, s'étendant de manière orthogonale à partir des surfaces supérieure et inférieure, et
dans lequel la trappe tournante comprend au moins un élément de blocage de rayonnement complémentaire (38, 38'), de préférence incliné, conçu pour s'imbriquer avec l'élément de blocage de rayonnement (39, 39') des surfaces supérieure et inférieure adjacentes de manière à bloquer le rayonnement pendant la rotation de la trappe tournante quelle que soit sa position de rotation ;
dans lequel, de préférence, le logement comprend une pluralité d'éléments de blocage de rayonnement (39, 39') et d'éléments de blocage de rayonnement complémentaires (38, 38') agencés de manière alternée avec des ouvertures entre eux, dans lequel les éléments de blocage de rayonnement (39, 39') et les éléments de blocage de rayonnement complémentaires (38, 38') sont conçus de sorte qu'une pluralité de cercles concentriques sont formés pendant la rotation de la trappe tournante.

8. Système (1) selon l'une quelconque des revendications précédentes, dans lequel le manipulateur (4) comprend une pluralité d'organes rotatifs (45) ; dans lequel chaque organe rotatif (45) comprend une partie d'entraînement configurée pour venir en prise avec la partie de couplage (52) d'au moins l'un des supports (5), et une partie entraînée susceptible de rotation de manière à faire pivoter le support (5) autour d'un axe (43) s'étendant de manière transversale depuis la fente de montage (42) ; et un actionneur (7) est configuré pour induire une rotation dans au moins l'un des organes rotatifs (45).

9. Système (1) selon l'une quelconque des revendications précédentes, dans lequel les fentes de montage (42) sont agencées de façon linéaire, de préférence le long d'un axe longitudinal (12) du manipulateur (4), de sorte que la pluralité de supports (5) peut être mise en rotation à l'intérieur du même plan transversal audit axe longitudinal.

10. Système (1) selon l'une quelconque des revendications précédentes, dans lequel le système d'imagerie par rayonnement (1) comprend au moins un second orifice d'accès (33) agencé à l'intérieur d'une enceinte distincte du premier orifice d'accès (33), de préférence sur un côté opposé de l'enceinte blindée (31) ;
dans lequel le manipulateur est configuré pour se coupler de manière amovible avec la pluralité de supports (5) suspendus aux éléments de retenue (36) du premier orifice d'accès (33), et pour libérer la pluralité de supports (5) sur les éléments de retenue (36) du second orifice d'accès (33).

11. Système (1) selon l'une quelconque des revendications précédentes, dans lequel le système d'imagerie par rayonnement (1) comprend un ou plusieurs rails reliant l'orifice d'accès (33) à l'espace de projection, et le manipulateur (4) est agencé sur les rails, lui permettant de se déplacer le long de ceux-ci.

12. Système (1) selon l'une quelconque des revendications précédentes, dans lequel le système d'imagerie par rayonnement (1) comprend au moins deux rails, de préférence agencés parallèlement et/ou côte à côte, et au moins deux manipulateurs, agencés sur les différents rails, permettant aux manipulateurs d'alterner entre l'orifice d'accès (33) et l'espace de projection.

13. Utilisation du système selon l'une quelconque des revendications précédentes pour la métrologie et/ou l'inspection de défauts.

14. Procédé d'inspection d'une pluralité d'articles (6), comprenant les étapes consistant à :
- fournir un système d'imagerie par rayonnement (1) selon l'une quelconque des revendications précédentes ;
- monter au moins une pluralité d'articles (6) sur une pluralité de supports (5) ;
- suspendre les supports (5) à un élément de retenue (36) agencé sur une trappe tournante d'un orifice d'accès (33) ;
- faire tourner la trappe tournante de l'orifice d'accès (33) jusqu'à ce que les supports (5) soient positionnés à l'intérieur d'un intérieur du système (1) ;
- coupler de manière amovible les supports (5) à un manipulateur (4) d'un appareil de manipulation d'articles (10) ;
- positionner au moins un article de la pluralité d'articles (6) à l'intérieur d'un espace de projection (23) pour acquérir une ou plusieurs images de projection de celui-ci ;
- repositionner les supports (5) sur l'élément de retenue (36) du même orifice d'accès (33) ou d'un autre ;
- libérer les supports (5) du manipulateur (4), suspendant de ce fait les supports (5) à l'élément de retenue (36) ;
- faire tourner la trappe tournante de l'orifice d'accès (33) jusqu'à ce que les supports (5) soient positionnés à l'extérieur du système (1) ;
- éventuellement, retirer les supports (5) de l'élément de retenue (36) ; et répéter les étapes précédentes pour une ou plusieurs autres pluralités d'articles (6).

15. Procédé selon la revendication 14,
dans lequel l'appareil de manipulation d'articles (10) couple de manière amovible les supports (5) en venant en prise avec les éléments de retenue (36) dans une direction qui est sensiblement orthogonale à l'élément de retenue (36), ajustant de ce fait la partie de couplage (52) des supports (5) jusque dans une pluralité de fentes de montage (42) sur le manipulateur (4), et
se dégageant de l'élément de retenue (36) dans une direction qui est sensiblement parallèle à l'élément de retenue (36), retirant de ce fait les supports (5) de l'élément de retenue (36) ; et/ou
dans lequel l'appareil de manipulation d'articles (10) libère le support (5) en venant en prise avec l'élément de retenue (36) dans une direction qui est sensiblement parallèle à l'élément de retenue (36), positionnant de ce fait la partie de retenue (53) des supports (5) sur l'élément de retenue (36), et
se dégageant de l'élément de retenue (36) dans une direction qui est sensiblement orthogonale à l'élément de retenue (36), suspendant de ce fait les supports (5) à l'élément de retenue (36).
